# EUROPEAN PATENT SPECIFICATION

(11) **EP 4 041 698 B1**
(45) Date of publication and mention of the grant of the patent: **10.07.2024**
(21) Application number: 20719192.5
(22) Date of filing: 17.04.2020
(51) Int. Cl.: C05B 17/00, C05D 3/02

(54) **FERTILIZER COMPRISING PHOSPHATE ROCK POWDER AND SURFACE-REACTED CALCIUM CARBONATE**
DÜNGEMITTEL MIT PHOSPHATSTEINPULVER UND OBERFLÄCHENREAGIERTEM CALCIUMCARBONAT
ENGRAIS COMPRENANT DE LA POUDRE DE ROCHE PHOSPHATÉE ET DU CARBONATE DE CALCIUM TRAITÉ PAR RÉACTION EN SURFACE

(30) Priority: 26.09.2019 EP 19199883
(43) Date of publication of application: 17.08.2022
(73) Proprietor: Omya International AG, 4665 Oftringen (CH)
(72) Inventor: OZYHAR, Tomasz, 8142 Uitkon (CH); HILTY VANCURA, Florentine, 8706 Meilen (CH); SIBIK, Svetlana, 4001 Basel (CH)
(74) Representative: Plougmann Vingtoft a/s
(86) International application number: PCT/EP2020/060816
(87) International publication number: WO 2021/058143

(56) References cited:
- EP-A1- 3 045 042
- EP-A1- 3 216 510
- WO-A1-2017/210768
- US-A1- 2006 010 946

## Description

### Technical field of the invention

The present invention relates to phosphate fertilizers. In particular, the present invention relates to phosphate fertilizers comprising phosphate rock powder (PRP) and surface-reacted calcium carbonate (SRCC).

### Background of the invention

Phosphate fertilizers with high efficiency as utilized in agriculture mostly come in liquid form which, while easy to apply on big flat surfaces in agricultural applications (provided that suitable equipment is available), are difficult to apply on hilly terrain where forest plantation are often being established. Dry forms of phosphate fertilizers such as triple super phosphate (TSP) or diammonium phosphate (DAP), monoammonium phosphate (MAP) are therefore commonly applied due to operational advantages compared to liquid solutions. One disadvantage of P containing fertilizers, especially DAP, is that they have a substantial risk of root burn (root burn salt index) and therefore cannot be applied directly in the planting hole. Granular fertilizer application therefore has the disadvantage that the available P may be too far away from the plant when it needs it most.

Further, fertilizers such as DAP and TSP are water soluble, which increases the potential risk of phosphorus (P) loss in surface run-off and risk of ground water pollution.

EP 3 216 510 discloses an adsorbing material comprising surface-modified calcium carbonate in admixture with apatite, magnesium carbonate, hydromagnesite and/or dolomite. The particulate material has a BET specific surface area as measured by the BET nitrogen method in the range from 10 to 200 m²/g. The surface-modified calcium carbonate can be kept in suspension, optionally further stabilised by a dispersant.

WO 2017/210768 discloses a mineral fertilizer composition comprising a full-spectrum of essential mineral, carbon-organic and microbiological nutrients for soil and plant health incorporated into a composite blended media chosen from the group comprising liquid, powder, granular, slurry. The blended media includes ingredients comprising: Glacial Gravel Dust, Paramagnetic Basalt Powder, Soft Rock Phosphate, Calcium Carbonate, Potassium-Bearing Rock Powders, Seawater Solids, Fulvic Acid Powder, Humic Acid Powder, Bentonite Clay, which includes clays chosen from the group comprising diatomaceous earth or other clays, endo or ecto mycorrhizae or other fungi spores, kelp meal powder.

EP 3 045 042 relates to the use of surface-reacted calcium carbonate-containing minerals and/or surface-reacted precipitated calcium carbonates as solid particulate carriers to enhance the efficacy of agrochemical compounds loaded onto said carriers.

The benefits of putting the P source directly or close to the root system indicates several advantages compared to traditional application 30cm away from planting hole due to immediate availability of soluble P to the seedling.

Hence, improved Phosphate fertilizers would be advantageous, and in particular a more efficient and/or reliable Phosphate fertilizer which minimizes the risk of root burn and leaching/surface run-off would be advantageous.

### Summary of the invention

The present invention provides a P containing fertilizer in granular form for application in e.g. plantation forestry that:
- Is easy to apply operationally in difficult terrain;
- Can be applied directly to the root in the planting hole with minimum root burn risk; and
provides a fast localized source of P coming from a carrier material (i.e. SRCC), a P containing salt loaded on the carrier, a slow release source of P from PRP and optionally a P containing salt loaded on the carrier material. P from SRCC and optionally the P containing salt is released fast whereas and as mentioned above the P released from PRP is released slowly. The present invention provides the possibility of creating different release patterns and sustained release depending on the ratio of SRCC to PRP.

As also outlined above, traditional fertilizers, such as DAP and TSP, are water-soluble which increases potential risk of phosphorus (P) loss in surface run-off and risk of ground water pollution. This is not the case with the fertilizers according to the present invention. SRCC and PRP behave like water-soluble fertilizers (reactivity) but are not water-soluble. The potential risk of phosphorus (P) loss in surface run-off are therefore decreased.

Thus, an object of the present invention relates to the provision of an improved P containing fertilizer.

In particular, it is an object of the present invention to provide an improved P containing fertilizer that solves the above mentioned problems of the prior art with root burns, surface run-off and/or risk of ground water pollution.

Thus, one aspect of the invention relates to a fertilizer composition comprising
- phosphate rock powder (PRP);
- surface-reacted calcium carbonate (SRCC); and
- optionally a binder;
wherein the surface-reacted calcium carbonate is a reaction product of natural and/or synthetic calcium carbonate with carbon dioxide and phosphoric acid, wherein the carbon dioxide is formed in situ by the phosphoric acid treatment .

In one embodiment, the surface-reacted calcium carbonate is a reaction product of natural and/or synthetic calcium carbonate with carbon dioxide, a phosphate salt and a weak acid.

Yet another aspect of the present invention is to provide a fertilizer pre-mix comprising
- Phosphate rock powder (PRP);
- Surface-reacted calcium carbonate (SRCC);
- A dispersing agent and
- Optionally a binder.

Still another aspect of the present invention is to provide a method for preparing a fertilizer composition according to the present invention, the method comprising
- providing phosphate rock powder (PRP);
- providing surface-reacted calcium carbonate (SRCC);
- optionally providing a binder;
- optionally providing a dispersing agent,
- mixing the PRP, the SRCC and optionally the binder and/or dispersing agent; and
- obtaining the fertilizer composition according to the invention.

In a further aspect, the present invention relates to a fertilizer composition comprising the fertilizer composition according to the invention.

In another aspect the present invention relates to a method of fertilizing soil or a planting substrate, said method comprises applying the fertilizer composition of the invention to a plant hole, to the planting line, to the ripping line, on the planting bed, on or into the soil and/or on or into a planting substrate.

In yet another aspect the present invention relates to the use of the fertilizer composition of the present invention or the fertilizer composition according to the present invention as a fertilizer, such as a P fertilizer.

### Brief description of the figures

Figure 1 shows phosphate release rate for phosphate rock powder (PRP 2) at pH 3 and pH 6 as a function of particle size.
Figure 2 shows the release rate of soluble phosphate from ultrafine phosphate rock 1(PRP1) and PRP2, surface reacted calcium carbonate (SRCC), triple superphosphate (TSP) at after 1h exposure solution at pH 3 and pH6.
Figure 3 shows Mehlich 3 extracted phosphorus from **A:** Triple Super Phosphate (TSP) **B:** Diammonium phosphate (DAP), **C:** ultrafine phosphate rock powder 1 (PRP 1 UF) and **D:** surface reacted calcium carbonate (SRCC) evaluated over a 125 day incubation lab study.
Figure 4 shows the net percent change in concentration of Mehlich 3 extracted phosphorus from initial concentration at time 0 over a 125 day period. The sources of P included Diammonium Phosphate (DAP), Triple Super Phosphate (TSP), ultrafine phosphate rock powder 1 (PRP 1 UF) and surface reacted calcium carbonate SRCC1. The value presented are an average (n=4) of soils.
Figure 5 shows pictures of fertilizer granules made from micronized phosphate rock and synthetic hydroxylapatite. % are by weight (wt.-%).
Figure 6 shows cumulative size distribution of the granules within 2-5 mm range. See also example 4.

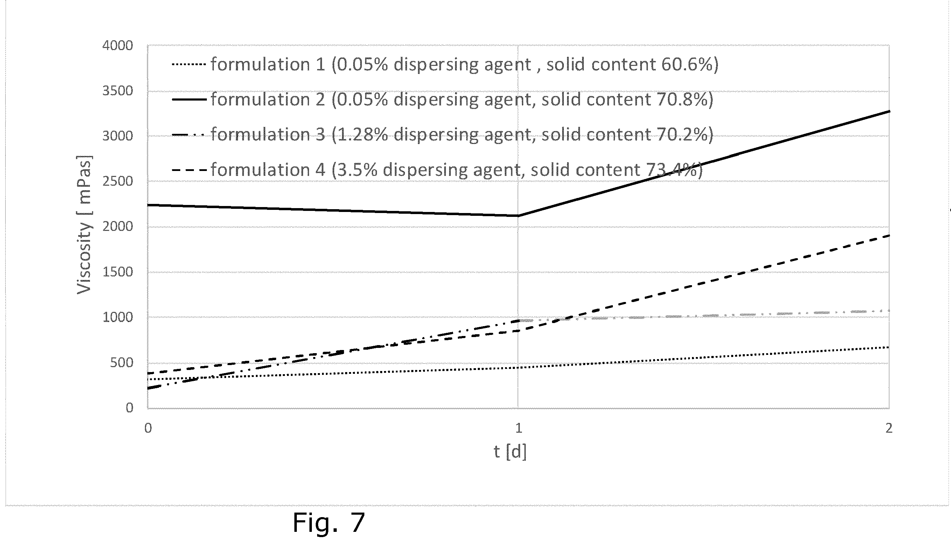

Figure 7 shows the viscosity for phosphate rock slurries with different amounts of dispersing agent and target solid content.

The present invention will now be described in more detail in the following.

### Detailed description of the invention

### Definitions

Prior to discussing the present invention in further details, the following terms and conventions will first be defined:

### Phosphate rock

In the present context the term "phosphate rock" or "Phosphorite", or "rock phosphate" is a non-detrital sedimentary rock, which contains high amounts of phosphate minerals. The phosphate content of phosphorite (or grade of phosphate rock) varies greatly, from 4% to 40% phosphorus pentoxide (P₂O₅). Marketed phosphate rock is enriched ("beneficiated") to at least 28%, often more than 30% P₂O₅. This occurs through washing, screening, de-liming, magnetic separation or flotation. By comparison, the average phosphorus content of sedimentary rocks is less than 0.2%. The phosphate may be present as fluorapatite Ca₅(PO₄)₃F typically in cryptocrystalline masses (grain sizes < 1 •m) referred to as collophane-sedimentary apatite deposits of uncertain origin. It is also present as hydroxyapatite Ca₅(PO₄)₃OH or Ca₁₀(PO₄)₆(OH)₂, which is often dissolved from vertebrate bones and teeth, whereas fluorapatite can originate from hydrothermal veins. Other sources also include chemically dissolved phosphate minerals from igneous and metamorphic rocks. Phosphorite deposits often occur in extensive layers, which cumulatively cover tens of thousands of square kilometres of the Earth's crust.

In the present context, the phosphate rock comprises at least 5 wt.-% phosphate (such as in the range of 10 to 40 wt.-% P₂O₅ based on the dry matter of phosphate rock).

### Apatite

In the present context, the term "apatite" means a group of phosphate minerals, usually referring to hydroxyapatite, fluorapatite and chlorapatite, with high concentrations of OH•, F• and Cl• ions, respectively, in the crystal, denoted by the chemical formula Ca5(PO4)3(F,CI,OH).

Thus, apatite is not falling within the definition of rock phosphate, rock phosphate or as we also named it phosphorite is not the same as apatite.

The apatite in phosphorite is present as cryptocrystalline masses referred to as collophane.

### Phosphate Rock Powder (PRP)

In the present context PRP is a product prepared from "phosphate rock" e.g. by grinding phosphate rock to a powder comprising particles having a weight median particle size d₅₀ in the range from 2µm - 50µm and/or a specific surface area in the range of 1-10 m²/g measured using nitrogen and the BET method. In general, the grinding of PRP may be a dry or wet grinding step and may be carried out with any conventional grinding device, for example, under conditions such that comminution predominantly results from impacts with a secondary body, i.e. in one or more of: a ball mill, a rod mill, a vibrating mill, a roll crusher, a centrifugal impact mill, a vertical bead mill, an attrition mill, a pin mill, a hammer mill, a pulveriser, a shredder, a de-clumper, a knife cutter, or other such equipment known to the skilled man. In case the PRP comprises a wet PRP containing mineral material, the grinding step may be performed under conditions such that autogenous grinding takes place and/or by horizontal ball milling, and/or other such processes known to the skilled man. The wet processed PRP containing mineral material thus obtained may be washed and dewatered by well-known processes, e.g. by flocculation, filtration or forced evaporation prior to drying. The subsequent step of drying (if necessary) may be carried out in a single step such as spray drying, or in at least two steps. It is also common that such a mineral material undergoes a beneficiation step (such as a flotation, bleaching or magnetic separation step) to remove impurities.

Some phosphate rocks come with impurities such as high contents of cadmium. Impurities such as cadmium can be removed from the PRP. A heat treatment process such as flash calcining is used to selectively remove the cadmium from the finer PRP. Flash calcining is a simple cost effective method of heating the fines to +900°C and removing the cadmium in the gas flow. Flash calcining or methods that require the heated particles to be carried in air may also have the effect of separating the cadmium from the PRP at lower than fuming temperatures. Particles in air travel slower than the air. The boiling point of cadmium is 765°C. The stripping action of the air is like wind over clothes on a clothesline, which will assist in removing the cadmium at lower temperatures. Heat treatment and removal of the cadmium results in a higher overall level of cadmium reduction than is currently possible using conventional cadmium removal methods. In this way large cost savings can be made.

By heat treating the PRP with a particle size less than 125 micron the total cadmium can be reduced by 16.6%.

### Intimate particle contact

When elemental Sulphur and PRP are inter-ground (under pressure) there is greater intimate contact between the particles. This results in a "bonding" together of the particles. As the inter grinding takes place the granule is also being compacted and this produces heat between 60 and 100°C. Sulphur mobilizes at around 80°C and will possibly mobilize at a lower temperature under the high pressures used to form this granule. The mobilized sulfur will smear the fine PRP particles thereby forming an extremely intimate contact.

Biological oxidation of elemental Sulphur (S) mixed and applied with PRP will increase dissolution of P from PRP to improve its effectiveness as a P fertilizer. In conventional fertilizers the Sulphur and PRP do not remain in sufficient contact to benefit from this effect.

### Surface-reacted Calcium Carbonate (SRCC)

The surface-reacted calcium carbonate is a reaction product of natural ground calcium carbonate or precipitated calcium carbonate with carbon dioxide and one or more H₃O⁺ ion donors, wherein the carbon dioxide is formed in situ by the H₃O⁺ ion donors treatment.

A H₃O⁺ ion donor in the context of the present invention is a Bronsted acid and/or an acid salt.

In a preferred embodiment of the invention the surface-reacted calcium carbonate is obtained by a process comprising the steps of: (a) providing a suspension of natural or precipitated calcium carbonate, (b) adding at least one acid having a pKₐ value of 0 or less at 20°C or having a pKₐ value from 0 to 2.5 at 20°C to the suspension of step (a).

"Natural ground calcium carbonate" (NGCC) is preferably selected from calcium carbonate containing minerals selected from the group comprising marble, chalk, limestone and mixtures thereof. Natural calcium carbonate may comprise further naturally occurring components such as magnesium carbonate, aluminum silicate etc.

In general, the grinding of natural ground calcium carbonate may be a dry or wet grinding step and may be carried out with any conventional grinding device, for example, under conditions such that comminution predominantly results from impacts with a secondary body, i.e. in one or more of: a ball mill, a rod mill, a vibrating mill, a roll crusher, a centrifugal impact mill, a vertical bead mill, an attrition mill, a pin mill, a hammer mill, a pulveriser, a shredder, a de-clumper, a knife cutter, or other such equipment known to the skilled man. In case the calcium carbonate containing mineral material comprises a wet ground calcium carbonate containing mineral material, the grinding step may be performed under conditions such that autogenous grinding takes place and/or by horizontal ball milling, and/or other such processes known to the skilled man. The wet processed ground calcium carbonate containing mineral material thus obtained may be washed and dewatered by well-known processes, e.g. by flocculation, filtration or forced evaporation prior to drying. The subsequent step of drying (if necessary) may be carried out in a single step such as spray drying, or in at least two steps. It is also common that such a mineral material undergoes a beneficiation step (such as a flotation, bleaching or magnetic separation step) to remove impurities.

### Precipitated calcium carbonate (PCC)

"Precipitated calcium carbonate" (PCC) in the meaning of the present invention is a synthesized material, generally obtained by precipitation following reaction of carbon dioxide and calcium hydroxide in an aqueous environment or by precipitation of calcium and carbonate ions, for example from the salts of CaCl₂ and NazCOs, out of solution. Further possible ways of producing PCC are the lime soda process, or the Solvay process in which PCC is a by-product of ammonia production. Precipitated calcium carbonate exists in three primary crystalline forms: calcite, aragonite and vaterite, and there are many different polymorphs (crystal habits) for each of these crystalline forms. Calcite has a trigonal structure with typical crystal habits such as scalenohedral (S-PCC), rhombohedral (R-PCC), hexagonal prismatic, pinacoidal, colloidal (C-PCC), cubic, and prismatic (P-PCC). Aragonite is an orthorhombic structure with typical crystal habits of twinned hexagonal prismatic crystals, as well as a diverse assortment of thin elongated prismatic, curved bladed, steep pyramidal, chisel shaped crystals, branching tree, and coral or worm-like form. Vaterite belongs to the hexagonal crystal system. The obtained PCC slurry can be mechanically dewatered and dried.

According to one embodiment of the present invention, the precipitated calcium carbonate is precipitated calcium carbonate, preferably comprising aragonitic, vateritic or calcitic mineralogical crystal forms or mixtures thereof.

Precipitated calcium carbonate may be ground prior to the treatment with the at least one H₃O⁺ ion donor by the same means as used for grinding natural calcium carbonate as described above.

According to one embodiment of the present invention, the natural or precipitated calcium carbonate is in form of particles having a weight median particle size d₅₀ of 0.05 to 10.0 µm, preferably 0.2 to 5.0 µm, more preferably 0.4 to 3.0 µm, most preferably 0.6 to 1.2 µm, especially 0.7 µm. According to a further embodiment of the present invention, the natural or precipitated calcium carbonate is in form of particles having a top cut particle size *d*₉₈ of 0.15 to 55 µm, preferably 1 to 40 µm, more preferably 2 to 25 µm, most preferably 3 to 15 µm, especially 4 µm.

The natural and/or precipitated calcium carbonate may be used dry or suspended in water. Preferably, a corresponding slurry has a content of natural or precipitated calcium carbonate within the range of 1 wt.-% to 90 wt.-%, more preferably 3 wt.-% to 60 wt.-%, even more preferably 5 wt.-% to 40 wt.-%, and most preferably 10 wt.-% to 25 wt.-% based on the weight of the slurry.

### Surface reacted calcium carbonate (SRCC)

The one or more H₃O⁺ ion donors used for the preparation of surface-reacted calcium carbonate (SRCC) may be any strong acid, medium-strong acid, or weak acid, or mixtures thereof, generating H₃O⁺ ions under the preparation conditions. According to the present invention, the at least one H₃O⁺ ion donor can also be an acidic salt, generating H₃O⁺ ions under the preparation conditions.

According to one embodiment, the at least one H₃O⁺ ion donor is a strong acid having a pKₐ of 0 or less at 20°C.

According to another embodiment, the at least one H₃O⁺ ion donor is a medium-strong acid having a pKₐ value from 0 to 2.5 at 20°C. If the pKₐ at 20°C is 0 or less, the acid is preferably selected from sulphuric acid, hydrochloric acid, or mixtures thereof. If the pKₐ at 20°C is from 0 to 2.5, the H₃O⁺ ion donor is preferably selected from H₂SO₃, H₃PO₄, oxalic acid, or mixtures thereof. The at least one H₃O⁺ ion donor can also be an acidic salt, for example, HSO₄ or H₂PO_{4⁻}, being at least partially neutralized by a corresponding cation such as Li⁺, Na⁺ or K⁺, or HPO₄²⁻, being at least partially neutralised by a corresponding cation such as Li⁺, Na⁺, K⁺, Mg²⁺ or Ca²⁺. The at least one H₃O⁺ ion donor can also be a mixture of one or more acids and one or more acidic salts.

According to still another embodiment, the at least one H₃O⁺ ion donor is a weak acid having a pKₐ value of greater than 2.5 and less than or equal to 7, when measured at 20°C, associated with the ionisation of the first available hydrogen, and having a corresponding anion, which is capable of forming water-soluble calcium salts. Subsequently, at least one water-soluble salt, which in the case of a hydrogen-containing salt has a pKₐ of greater than 7, when measured at 20°C, associated with the ionisation of the first available hydrogen, and the salt anion of which is capable of forming water-insoluble calcium salts, is additionally provided. According to the preferred embodiment, the weak acid has a pKₐ value from greater than 2.5 to 5 at 20°C, and more preferably the weak acid is selected from the group consisting of acetic acid, formic acid, propanoic acid, and mixtures thereof. Exemplary cations of said water-soluble salt are selected from the group consisting of potassium, sodium, lithium and mixtures thereof. In a more preferred embodiment, said cation is sodium or potassium. Exemplary anions of said water-soluble salt are selected from the group consisting of phosphate, dihydrogen phosphate, monohydrogen phosphate, oxalate, silicate, mixtures thereof and hydrates thereof. In a more preferred embodiment, said anion is selected from the group consisting of phosphate, dihydrogen phosphate, monohydrogen phosphate, mixtures thereof and hydrates thereof. In a most preferred embodiment, said anion is selected from the group consisting of dihydrogen phosphate, monohydrogen phosphate, mixtures thereof and hydrates thereof. Water-soluble salt addition may be performed dropwise or in one step. In the case of drop wise addition, this addition preferably takes place within a time period of 10 minutes. It is more preferred to add said salt in one step.

According to one embodiment of the present invention, the at least one H₃O⁺ ion donor is selected from the group consisting of hydrochloric acid, sulphuric acid, sulphurous acid, phosphoric acid, citric acid, oxalic acid, acetic acid, formic acid, and mixtures thereof. Preferably the at least one H₃O⁺ ion donor is selected from the group consisting of hydrochloric acid, sulphuric acid, sulphurous acid, phosphoric acid, oxalic acid, H₂PO_{4⁻}, being at least partially neutralised by a corresponding cation such as Li⁺, Na⁺ or K⁺, being at least partially neutralised by a corresponding cation such as Li⁺, Na⁺, K⁺, Mg²⁺, or Ca²⁺ and mixtures thereof, more preferably the at least one acid is selected from the group consisting of hydrochloric acid, sulphuric acid, sulphurous acid, phosphoric acid, oxalic acid, or mixtures thereof, and most preferably, the at least one H₃O⁺ ion donor is phosphoric acid.

The one or more H₃O⁺ ion donor can be added to the suspension as a concentrated solution or a more diluted solution. Preferably, the molar ratio of the H₃O⁺ ion donor to the natural or precipitated calcium carbonate is from 0.01 to 4, more preferably from 0.02 to 2, even more preferably 0.05 to 1 and most preferably 0.1 to 0.58.

As an alternative, it is also possible to add the H₃O⁺ ion donor to the water before the natural or precipitated calcium carbonate is suspended.

In a next step, the natural or precipitated calcium carbonate is treated with carbon dioxide. If a strong acid such as sulphuric acid or hydrochloric acid is used for the H₃O⁺ ion donor treatment of the natural or precipitated calcium carbonate, the carbon dioxide is automatically formed.

In a preferred embodiment, the H₃O⁺ ion donor treatment step and/or the carbon dioxide treatment step are repeated at least once, more preferably several times. According to one embodiment, the at least one H₃O⁺ ion donor is added over a time period of at least about 5 min, preferably at least about 10 min, typically from about 10 to about 20 min, more preferably about 30 min, even more preferably about 45 min, and sometimes about 1 h or more.

Further details about the preparation of the surface-reacted natural calcium carbonate are disclosed in WO 00/39222 A1, WO 2004/083316 A1, WO 2005/121257 A2, WO 2009/074492 A1, EP 2 264 108 A1, EP 2 264 109 A1 and US 2004/0020410 A1, the content of these references herewith being included in the present application.

Similarly, surface-reacted precipitated calcium carbonate is obtained. As can be taken in detail from WO 2009/074492 A1, surface-reacted precipitated calcium carbonate is obtained by contacting precipitated calcium carbonate with H₃O⁺ ions and with anions being solubilized in an aqueous medium and being capable of forming water-insoluble calcium salts, in an aqueous medium to form a slurry of surface-reacted precipitated calcium carbonate, wherein said surface-reacted precipitated calcium carbonate comprises an insoluble, at least partially crystalline calcium salt of said anion formed on the surface of at least part of the precipitated calcium carbonate.

Said solubilized calcium ions correspond to an excess of solubilized calcium ions relative to the solubilized calcium ions naturally generated on dissolution of precipitated calcium carbonate by H₃O⁺ ions, where said H₃O⁺ ions are provided solely in the form of a counterion to the anion, i.e. via the addition of the anion in the form of an acid or non-calcium acid salt, and in absence of any further calcium ion or calcium ion generating source.

Said excess solubilized calcium ions are preferably provided by the addition of a soluble neutral or acid calcium salt, or by the addition of an acid or a neutral or acid non-calcium salt which generates a soluble neutral or acid calcium salt in situ.

Said H₃O⁺ ions may be provided by the addition of an acid or an acid salt of said anion, or the addition of an acid or an acid salt which simultaneously serves to provide all or part of said excess solubilized calcium ions.

In a further preferred embodiment of the preparation of the surface-reacted natural or precipitated calcium carbonate, the natural or precipitated calcium carbonate is reacted with the one or more H₃O⁺ ion donors and/or the carbon dioxide in the presence of at least one compound selected from the group consisting of silicate, silica, aluminium hydroxide, earth alkali aluminate such as sodium or potassium aluminate, magnesium oxide, or mixtures thereof. Preferably, the at least one silicate is selected from an aluminium silicate, a calcium silicate, or an earth alkali metal silicate. These components can be added to an aqueous suspension comprising the natural or precipitated calcium carbonate before adding the one or more H₃O⁺ ion donors.

Alternatively, the silicate and/or silica and/or aluminium hydroxide and/or earth alkali aluminate and/or magnesium oxide component(s) can be added to the aqueous suspension of natural or precipitated calcium carbonate while the reaction of natural or precipitated calcium carbonate with the one or more H₃O⁺ ion donors and carbon dioxide has already started. Further details about the preparation of the surface-reacted natural or precipitated calcium carbonate in the presence of at least one silicate and/or silica and/or aluminium hydroxide and/or earth alkali aluminate component(s) are disclosed in WO 2004/083316 A1, the content of this reference herewith being included in the present application.

The surface-reacted calcium carbonate can be kept in suspension, optionally further stabilised by a dispersant. Conventional dispersants known to the skilled person can be used. A preferred dispersant is comprised of polyacrylic acids and/or carboxymethyl-celluloses.

Alternatively, the aqueous suspension described above can be dried, thereby obtaining the solid (i.e. dry or containing as little water that it is not in a fluid form) surface-reacted natural or precipitated calcium carbonate in the form of granules or a powder.

In a preferred embodiment, the surface-reacted calcium carbonate has a specific surface area of from 1 m²/g to 200 m²/g, such as from 5 m²/g to 40 m²/g, e.g. from 10 m²/g to 35 m²/g, such as from 15 m²/g to 30 m²/g, such as from 20 m²/g to 25 m²/g, preferably from 27 m²/g to 180 m²/g, more preferably from 30 m²/g to 160 m²/g, even more preferably from 45 m²/g to 150 m²/g, most preferably from 48 m²/g to 140 m²/g, measured using nitrogen and the BET method. For example, the surface-reacted calcium carbonate has a specific surface area of from 75 m²/g to 100 m²/g, measured using nitrogen and the BET method. The BET specific surface area in the meaning of the present invention is defined as the surface area of the particles divided by the mass of the particles. As used therein the specific surface area is measured by adsorption using the BET isotherm (ISO 9277:2010) and is specified in m²/g.

It is furthermore preferred that the surface-reacted calcium carbonate particles have a volume median grain diameter *d*₅₀ (vol) of from 1 to 75 µm, preferably from 2 to 50 µm, more preferably 3 to 40 µm, even more preferably from 4 to 30 µm, and most preferably from 5 to 15 µm.

It may furthermore be preferred that the surface-reacted calcium carbonate particles have a grain diameter *d*₉₈ (vol) of from 2 to 150 µm, preferably from 4 to 100 µm, more preferably 6 to 80 µm, even more preferably from 8 to 60 µm, and most preferably from 10 to 30 µm.

The value *dₓ* represents the diameter relative to which x % of the particles have diameters less than *dₓ.* This means that the *d*₉₈ value is the particle size at which 98 % of all particles are smaller. The *d*₉₈ value is also designated as "top cut". The d*ₓ* values may be given in volume or weight percent. The *d*₅₀ (wt.-%) value is thus the weight median particle size, i.e. 50 wt.-% of all grains are smaller than this particle size, and the *d*₅₀ (vol) value is the volume median particle size, i.e. 50 vol.-% of all grains are smaller than this particle size.

Volume median grain diameter *d*₅₀ was evaluated using a Malvern Mastersizer 3000 Laser Diffraction System. The *d*₅₀ or *d*₉₈ value, measured using a Malvern Mastersizer 3000 Laser Diffraction System, indicates a diameter value such that 50 % or 98 % by volume, respectively, of the particles have a diameter of less than this value. The raw data obtained by the measurement are analysed using the Mie theory, with a particle refractive index of 1.57 and an absorption index of 0.005.

The weight median grain diameter is determined by the sedimentation method, which is an analysis of sedimentation behaviour in a gravimetric field. The measurement is made with a Sedigraph^{™} 5120, Micromeritics Instrument Corporation. The method and the instrument are known to the skilled person and are commonly used to determine grain size of fillers and pigments. The measurement is carried out in an aqueous solution of 0.1 wt.-% Na₄P₂O₇. The samples were dispersed using a high speed stirrer and sonicated.

The processes and instruments are known to the skilled person and are commonly used to determine grain size of fillers and pigments.

The specific pore volume is measured using a mercury intrusion porosimetry measurement using a Micromeritics Autopore V 9620 mercury porosimeter having a maximum applied pressure of mercury 414 MPa (60 000 psi), equivalent to a Laplace throat diameter of 0.004 µm (~ nm). The equilibration time used at each pressure step is 20 seconds. The sample material is sealed in a 5 cm³ chamber powder penetrometer for analysis. The data are corrected for mercury compression, penetrometer expansion and sample material compression using the software Pore-Comp (Gane, P.A.C., Kettle, J.P., Matthews, G.P. and Ridgway, C.J., "Void Space Structure of Compressible Polymer Spheres and Consolidated Calcium Carbonate Paper-Coating Formulations", Industrial and Engineering Chemistry Research, 35(5), 1996, p1753-1764.).

The total pore volume seen in the cumulative intrusion data can be separated into two regions with the intrusion data from 214 µm down to about 1 - 4 µm showing the coarse packing of the sample between any agglomerate structures contributing strongly. Below these diameters lies the fine interparticle packing of the particles themselves. If they also have intra particle pores, then this region appears bi modal, and by taking the specific pore volume intruded by mercury into pores finer than the modal turning point, i.e. finer than the bi-modal point of inflection, the specific intraparticle pore volume is defined. The sum of these three regions gives the total overall pore volume of the powder, but depends strongly on the original sample compaction/settling of the powder at the coarse pore end of the distribution.

By taking the first derivative of the cumulative intrusion curve the pore size distributions based on equivalent Laplace diameter, inevitably including poreshielding, are revealed. The differential curves clearly show the coarse agglomerate pore structure region, the interparticle pore region and the intraparticle pore region, if present. Knowing the intraparticle pore diameter range it is possible to subtract the remainder interparticle and interagglomerate pore volume from the total pore volume to deliver the desired pore volume of the internal pores alone in terms of the pore volume per unit mass (specific pore volume). The same principle of subtraction, of course, applies for isolating any of the other pore size regions of interest.

Preferably, the surface-reacted calcium carbonate has an intra-particle intruded specific pore volume in the range from 0.1 to 2.3 cm³/g, more preferably from 0.2 to 2.0 cm³/g, especially preferably from 0.4 to 1.8 cm³/g and most preferably from 0.6 to 1.6 cm³/g, calculated from mercury porosimetry measurement.

The intra-particle pore size of the surface-reacted calcium carbonate preferably is in a range of from 0.004 to 1.6 µm, more preferably in a range of from 0.005 to 1.3 µm, especially preferably from 0.006 to 1.15 µm and most preferably of 0.007 to 1.0 µm, e.g. from 0.01 to 1.0 µm, such as from 0.05 to 0.9 µm, e.g. from 0.1 to 0.8 µm, such as from 0.3 to 0.6 µm µm determined by mercury porosimetry measurement.

### Parameters - e.g. surface area, particle size and pore volume

In the present context particle sizes are determined by:
BET specific surface area in the meaning of the present invention is defined as the surface area of the particles divided by the mass of the particles. As used therein the specific surface area is measured by adsorption using the BET isotherm (ISO 9277:2010) and is specified in m²/g.

The value *dₓ* (e.g. x = 50 or 98) represents the diameter relative to which *x* % of the particles have diameters less than *dₓ.* This means that the *d*₉₈ value is the particle size at which 98 % of all particles are smaller. The *d*₉₈ value is also designated as "top cut". The *dₓ* values may be given in volume or weight percent. The *d*₅₀ (wt) value is thus the weight median particle size, i.e. 50 wt.-% of all grains are smaller than this particle size, and the *d*₅₀ (vol) value is the volume median particle size, i.e. 50 vol.-% of all grains are smaller than this particle size.

Volume median grain diameter *d*₅₀ was evaluated using a Malvern Mastersizer 3000 Laser Diffraction System. The *d*₅₀ or *d*₉₈ value, measured using a Malvern Mastersizer 3000 Laser Diffraction System, indicates a diameter value such that 50 % or 98 % by volume, respectively, of the particles have a diameter of less than this value. The raw data obtained by the measurement are analysed using the Mie theory, with a particle refractive index of 1.57 and an absorption index of 0.005.

The weight median grain diameter is determined by the sedimentation method, which is an analysis of sedimentation behaviour in a gravimetric field. The measurement is made with a Sedigraph^{™} 5120, Micromeritics Instrument Corporation. The method and the instrument are known to the skilled person and are commonly used to determine grain size of fillers and pigments. The measurement is carried out in an aqueous solution of 0.1 wt.-% Na₄P₂O₇. The samples were dispersed using a high speed stirrer and sonicated.

The processes and instruments are known to the skilled person and are commonly used to determine grain size of fillers and pigments.

The specific pore volume is measured using a mercury intrusion porosimetry measurement using a Micromeritics Autopore V 9620 mercury porosimeter having a maximum applied pressure of mercury 414 MPa (60 000 psi), equivalent to a Laplace throat diameter of 0.004 µm (~ nm). The equilibration time used at each pressure step is 20 seconds. The sample material is sealed in a 5 cm³ chamber powder penetrometer for analysis. The data are corrected for mercury compression, penetrometer expansion and sample material compression using the software Pore-Comp (Gane, P.A.C., Kettle, J.P., Matthews, G.P. and Ridgway, C.J., "Void Space Structure of Compressible Polymer Spheres and Consolidated Calcium Carbonate Paper-Coating Formulations", Industrial and Engineering Chemistry Research, 35(5), 1996, p1753-1764.).

The total pore volume seen in the cumulative intrusion data can be separated into two regions with the intrusion data from 214 µm down to about 1 - 4 µm showing the coarse packing of the sample between any agglomerate structures contributing strongly. Below these diameters lies the fine interparticle packing of the particles themselves. If they also have intraparticle pores, then this region appears bi modal, and by taking the specific pore volume intruded by mercury into pores finer than the modal turning point, i.e. finer than the bi-modal point of inflection, the specific intraparticle pore volume is defined. The sum of these three regions gives the total overall pore volume of the powder, but depends strongly on the original sample compaction/settling of the powder at the coarse pore end of the distribution.

By taking the first derivative of the cumulative intrusion curve the pore size distributions based on equivalent Laplace diameter, inevitably including poreshielding, are revealed. The differential curves clearly show the coarse agglomerate pore structure region, the interparticle pore region and the intraparticle pore region, if present. Knowing the intraparticle pore diameter range it is possible to subtract the remainder interparticle and interagglomerate pore volume from the total pore volume to deliver the desired pore volume of the internal pores alone in terms of the pore volume per unit mass (specific pore volume). The same principle of subtraction, of course, applies for isolating any of the other pore size regions of interest.

### Fertilizer composition

As also outlined under summary of the invention, the present invention provides an improved P containing fertilizer, which is considered not to be water-soluble but which behaves like the traditional water-soluble P fertilizers. Thus, an aspect of the invention relates to a fertilizer composition comprising
- phosphate rock powder (PRP);
- surface-reacted calcium carbonate (SRCC); and
- optionally a binder;
wherein the surface-reacted calcium carbonate is a reaction product of natural and/or synthetic calcium carbonate with carbon dioxide and phosphoric acid, wherein the carbon dioxide is formed in situ by the phosphoric acid treatment.

Example 2 shows release rates of soluble phosphate at pH 3 and pH 6. Example 3 shows time-dependent release pattern rate of soluble phosphorus in soil solution. Example 4 shows production of fertilizers according to the present invention.

In an embodiment, the source of natural calcium carbonate for preparing the surface-reacted calcium carbonate is selected from the group of marble, calcite, chalk, limestone or dolomite and/or mixtures thereof, and/or wherein the synthetic calcium carbonate for preparing the surface-reacted calcium carbonate is precipitated calcium carbonate selected from the group of aragonitic, vateritic or calcitic mineralogical crystals form, especially prismatic, rhombohedral or scalenohedral or mixtures thereof.

In another embodiment, the PRP satisfies the general formula:

Ca₁₀₋ᵢ₋ⱼ Naᵢ Mgⱼ (PO₄)₆₋ₓ (CO₃)ₓ F_{2+0.4x},

and wherein Ca can be substituted by Na and Mg, and PO₄ can be substituted by CO₃ and F.

The particle size of the PRP may vary. Thus, in an embodiment, the PRP has a weight median particle size d₅₀ in the range of 2 µm - 50 µm, such as in the range of 5 µm - 45 µm, e.g. in the range of 10 µm - 40 µm, such as in the range of 15 µm - 35 µm, e.g. in the range of 20 µm - 30 µm, preferably in the range from 2-15 µm. In yet an embodiment, the PRP has a specific surface area [m²/g] in the range of 1-20 m²/g, such as 2-15 m²/g, preferably in the range of 3-10 m²/g

In another embodiment, the SRCC has a volume median particle size d₅₀ in the range of 1 µm - 100 µm, e.g. 5-95 µm, such as 10-90 µm, e.g. 20-80 µm, such as 30-70 µm, e.g. 40-60 µm. In a further embodiment, the SRCC has a particle size in the range of 5 µm - 25 µm (d₅₀) and/or the PRP has a particle size in the range 2 µm - 25 µm (d₅₀). In a preferred embodiment, the SRCC has a particle size in the range of 1 µm - 100 µm (d₅₀) and/or the PRP has a particle size in the range 2 µm - 15 µm (d₅₀). Particle sizes and surface areas for PRP and SRCC are outlined in table 2 in example 1.

The amount of P in the PRP may also vary. Thus, in a further embodiment, the PRP has a phosphorus content (P₂O₅) in the range of 10 to 40 wt.-% based on the dry weight of PRP, such as 15-35 wt.-%, e.g. 20-29 wt.-%, preferably 12-31 wt.-%. P content is measured according to ISO6598. As outlined in example 1 table 1 P content around the above intervals have been identified.

The ratio between PRP and SRCC in the fertilizer composition may also vary. Thus, in an embodiment, the weight ratio between PRP and SRCC is in the range ratio of 99:1 to 1:99, such as 99:1 to 80:20 or e.g. 80:20 to 50:50.

In yet an embodiment, the fertilizer composition comprises
- 1-99 wt.-% PRP;
- 99-1 wt.-% SRCC; and
- Optionally 1-10 wt.-% binder

Example 4 describes different compositions according to the invention, with different proportions of PRP, SRCC and a binder. As also outlined in example 5, depending on the ratio between PRP and SRCC properties such as hardness, granule size distribution and colour changes.

Surprisingly the inventors have found that by combining PRP and SRCC it is possible to obtain a composition that provides a fast localized source of P coming from the SRCC and a slow release source of P from PRP. Due to the nature of the SRCC it may be possible to combine not only with a P containing salt but various other compounds - such compounds may be pesticides, herbicides, pigments, potassium ions, boron ions, zink ions, quartz, silica, calcite, dolomite, feldspar, kaolinite, mica and mixtures thereof. Due to the unique combination of SRCC and PRP it is possible to create tailormade release patterns and sustained release by varying the ratio of SRCC to PRP.

In yet an embodiment, the fertilizer composition has a phosphorus content (P₂O₅) in the range of 11-60 wt.-%, e.g. in the range of 15-55 wt.-%, such as in the range of 20-49 wt.-%, e.g. in the range of 25-40 wt.-%, such as in the range of 30-35 wt.-%.

The fertilizer composition may be in different forms. Thus, in an embodiment, the fertilizer composition is in the form of a powder, granules, prills or pellets. In another embodiment, the granules, prills or pellets has a moisture content in the range from 1 to 20 wt.-%, such as in the range from 2-15 wt.-%, e.g. in the range from 4-10 wt.-%, such as in the range from 5-9 wt.-%.

As also described above and in example 4, the hardness varies e.g. depending on the ratio between PRP and SRCC. Thus, in an embodiment, the granules, prills or pellets has a hardness in the range of 1-60 N, such as 20 - 50 N, preferably 30-50 N (Newton) when measured using a hardness tester Force Gauge PCE-FN200 in a peak mode. In one embodiment, the granules, prills or pellets have a size in the range from about 0.8 mm to 20 mm when measured using Retsch Camsizer in accordance with ISO 13322-2.

Hardness also has an influence on release rates since harder products will have a slower release rate. Thus by varying the ratio between PRP and SRCC (or mixing compositions with different ratios of PRP and SRCC) release rate can be controlled.

In an embodiment, the fertilizer composition may comprise a binder. Binders are commonly known in the field, however the binder may be chosen from lignin sulfonate, maltodextrin or molasses, and combinations thereof. The binder may also be present in the fertilizer composition in an amount in the range of 1-10 wt.-% such as 2-8 wt.-%, such as 4-6 wt.-%.

The fertilizer composition may be in the form of a granule, prill or pellet and thus, in here is also disclosed a granule, prill or pellet comprising
- Phosphate rock powder (PRP);
- Surface-reacted calcium carbonate (SRCC); and
- Optionally at least one binder.

Depending on the method applied to prepare the fertilizer composition (e.g. the granules, prills or pellets) a binder may not be needed. This may be the case if a roller compactor is applied to prepare the granules, prills or pellets. Thus, in one embodiment the fertilizer composition does not comprise a binder.

In one embodiment, the fertilizer composition comprises a dispersing agent. The dispersing agent may be Polycarboxylate.

Thus, in a further aspect the present invention relates to a fertilizer pre-mix comprising
- Phosphate rock powder (PRP);
- Surface-reacted calcium carbonate (SRCC);
- A dispersing agent and
- Optionally a binder.

The aim of the fertilizer pre-mix is that it may be marketed and sold as a separate product. Before use a liquid is added so as to obtain a slurry.

Thus, the fertilizer composition of the present invention may also be in the form of a slurry. In order to obtain a slurry which may be spreadable in the field and at the same time meets the need of the soil and/or plants to which it is to be applied, it may be contemplated that the slurry has a solid content in the range of 10-70 wt.-%, such as in the range of 10-60 wt.-%, such as in the range of 10-50 wt.-%.

Likewise, it may be contemplated that the slurry has a viscosity in the range of 200-2500 mPas, e.g. 300-1900 mPas, such as 400-1600 mPas, e.g. 600-1400 mPas, such as 800-1200 mPas, e.g. 400-900 mPas, preferably in the range from 250 - 1000 mPas. The viscosity is measured by Brookfield DV-II / 100 rpm / Spindle 3-5 / 60 s.

Depending on the application of the fertilizer composition, the fertilizer composition may (irrespective of the form) further comprise one or more of pesticides, herbicides, pigments, ions such as potassium, boron, or zink ions, quartz, silica, calcite, dolomite, feldspar, kaolinite, mica and/or mixtures thereof.

The components mentioned above may be bound/loaded, absorbed or adsorbed to the SRCC. The components may be bound to the SRCC by applying the binder mentioned above however, in other embodiment no binder is needed. Loading within the meaning of the present invention refers to a mixing step, wherein the fertilizer compositions mentioned above and the SRCC are either mixed in the presence of a solvent, preferably water, or wherein the fertilizer compositions mentioned above are mixed with solvent and thereafter mixed with the SRCC. If necessary, the solvent mediates the ad- and/or absorption of compositions mentioned above onto the surface and/or into the pores of the SRCC.

In another embodiment the fertilizer composition has a release rate of soluble phosphorous (e.g. P₂O₅) in the range of 30-100%, e.g. 40-90%, such as 50-80%, e.g. 60-70% after 1 hour exposure time at 2% citrate buffer solution at pH 3.

In a further embodiment the fertilizer composition has a release rate of soluble phosphorous in the range of 10-30% a after 1 hour exposure time at 2% citrate buffer solution at pH 6.

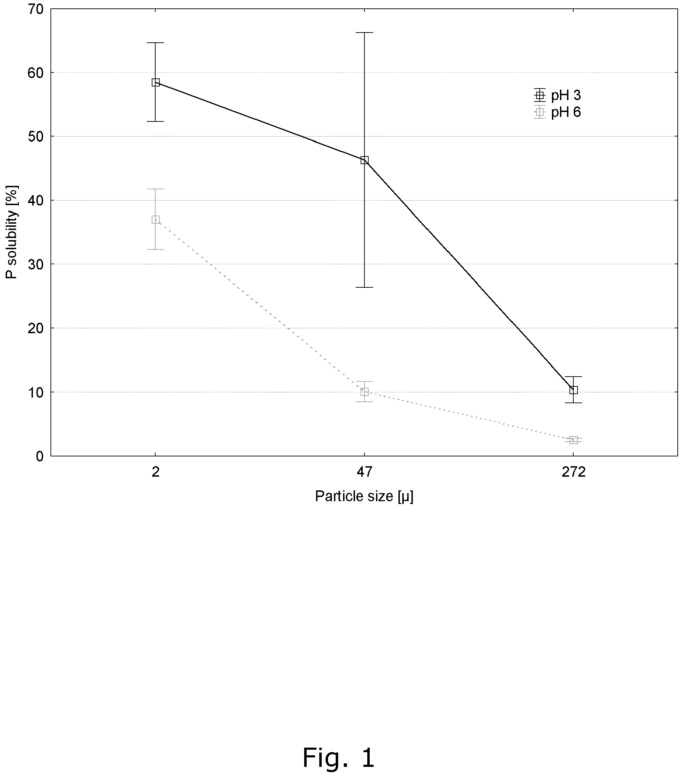

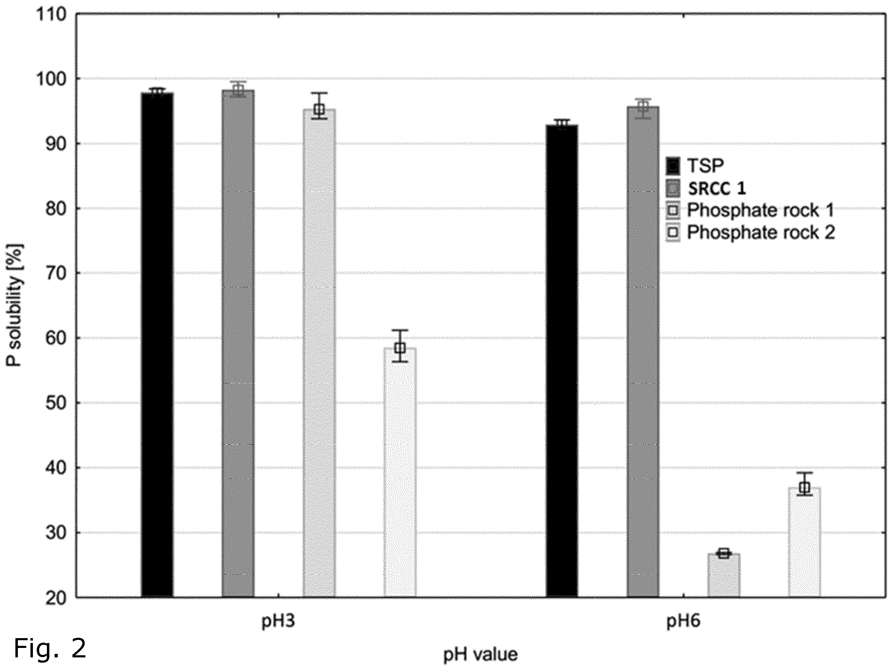

Looking at Example 2, it can be seen from Table 4 and Fig. 1 that reactivity of e.g. finely ground phosphate rock can be increased by decreasing the particle size, even at pH 6. By increasing the surface area of particles, it was surprisingly found that inorganic particles behave similar to water soluble fertilizers (Table 4 and Fig. 2).

### Method for preparing a composition

In a another aspect the present invention relates to a method for preparing a fertilizer composition according to the present invention, the method comprising
- providing phosphate rock powder (PRP);
- providing surface-reacted calcium carbonate (SRCC);
- optionally providing a binder;
- optionally providing a dispersing agent,
- mixing the PRP, the SRCC and optionally the binder and/or dispersing agent; and
- obtaining the fertilizer composition according to the present invention.

Where the fertilizer composition is to be in the form of granules, prills or pellets the method may further comprises subjecting the composition to a pelletizer, a roller compactor, disc granulator, fluidized bed granulator or pelletizing pan, and obtaining granules, prills or pellets.

The fertilizer composition may also be in the form of a powder.

The method may further comprise mixing the powder with a dispersing agent and obtaining a fertilizer pre-mix.

The fertilizer pre-mix may be marketed and sold as a separate commodity. Before use, the pre-mix may be added a liquid to obtain a slurry. Thus, in an embodiment the method further comprises mixing the pre-mix with a liquid, such as but not limited to water, and obtaining a slurry.

The fertilizer composition according to the present invention may be applied as a fertilizer and thus, a further aspect of the present invention relates to a fertilizer composition comprising the fertilizer composition of the present invention.

### Method of fertilizing soil or a planting substrate

It follows that another aspect of the present invention pertains to a method of fertilizing soil or a planting substrate, said method comprises applying the fertilizer composition according to the present invention to a plant hole, to the planting line, to the ripping line, on the planting bed, on or into the soil and/or on or into a planting substrate. Likewise, another aspect relates to the use of a fertilizer composition according to the present invention or the fertilizer composition according to the present invention as a fertilizer, such as a P fertilizer (phosphate source containing fertilizer). The use of the fertilizer composition may minimize root burn and phosphorous leaching. Again, the fertilizer composition may applied to a plant hole, to the planting line, to the ripping line, on the planting bed, on or into the soil and/or on or into a planting substrate.

### Eucalyptus

In an embodiment, the soil to be fertilized had a pH below 7. As shown in example 6, SRCC1 was more suitable for application on acid soils compared to commonly used water-soluble fertilizers such as TSP.

In an embodiment, the plant hole may be for *Eucalyptus* such as *Eucalyptus globulus Labill.* Growth of *Eucalyptus* was tested in example 6.

It should be noted that embodiments and features described in the context of one of the aspects of the present invention also apply to the other aspects of the invention.

All patent and non-patent references cited in the present application, are hereby incorporated by reference in their entirety.

The invention will now be described in further details in the following non-limiting examples.

### Materials and methods

All phosphorus containing materials listed in Table 1 below were characterized by measuring material properties following test methods described below.

### Particle size distribution

Particles size distribution (PSD) was measured using a Malvern Mastersizer 3000 Laser Diffraction System with an Aero 5 Dry Powder Dispersion Unit (Malvern Panalytica, Malvern, UK). Measurements were performed at 1.5 bar.

The size distribution of the granulated product was measured by Retsch Camsizer P3. The detectors capture the image of the particles falling down from the conveyor in accordance of with ISO 13322-2 (YEAR). This dynamic image analysis is specifically used for the particles ranging from 20 µm to 30 mm, which is well suited for the granulated products.

### Mineralogical composition

Samples were analyzed with a Bruker D8 Advance powder diffractometer obeying Bragg's law (Bruker, Billerica MA, USA. This diffractometer consists of a 1 kW X-ray tube, a sample holder, a •- • goniometer, and a LYNXEYE XE-T detector. The profiles were chart recorded automatically using a scan speed of 0.02° per second in 2•. The resulting powder diffraction pattern can easily be classified by mineral content using the DIFFRACsuite software packages EVA and SEARCH, based on reference patterns of the ICDD PDF.

Quantitative analysis of diffraction data refers to the determination of amounts of different phases in a multi-phase sample and has been performed using the DIFFRACsuite software package TOPAS following the Rietveld approach.

### BET specific surface area (SSA) of a material

The BET specific surface area was measured via the BET process according to ISO 9277 using nitrogen, following conditioning of the sample by heating at 250°C for a period of 30 minutes. Prior to such measurements, the sample was filtered, rinsed and dried at 110°C in an oven for at least 12 hours.

*Particle size distribution (volume* % *particles with a diameter < X), d₅₀ value (volume median grain diameter) and d*₉₈ *value of a particulate material* Volume median grain diameter d₅₀ was evaluated using a Malvern Mastersizer 3000 Laser Diffraction System. The d₅₀ or *d*₉₈ value, measured using a Malvern Mastersizer 3000 Laser Diffraction System, indicates a diameter value such that 50 % or 98 % by volume, respectively, of the particles have a diameter of less than this value. The raw data obtained by the measurement is analysed using the Mie theory, with a particle refractive index of 1.57 and an absorption index of 0.005.

The weight median grain diameter is determined by the sedimentation method, which is an analysis of sedimentation behaviour in a gravimetric field. The measurement is made with a Sedigraph^{™} 5100 of Micromeritics Instrument Corporation. The method and the instrument are known to the skilled person and are commonly used to determine grain size of fillers and pigments. The measurement is carried out in an aqueous solution of 0.1 wt.-% Na₄P₂O₇. The samples were dispersed using a high speed stirrer and sonicated.

### Intra-particle intruded specific pore volume (in cm³/g)

The specific pore volume is measured using a mercury intrusion porosimetry measurement using a Micromeritics Autopore V 9620 mercury porosimeter having a maximum applied pressure of mercury 414 MPa (60 000 psi), equivalent to a Laplace throat diameter of 0.004 •m (~ nm). The equilibration time used at each pressure step is 20 seconds. The sample material is sealed in a 5 cm³ chamber powder penetrometer for analysis. The data are corrected for mercury compression, penetrometer expansion and sample material compression using the software Pore-Comp (Gane, P.A.C., Kettle, J.P., Matthews, G.P. and Ridgway, C.J., "Void Space Structure of Compressible Polymer Spheres and Consolidated Calcium Carbonate Paper-Coating Formulations", Industrial and Engineering Chemistry Research, 35(5), 1996, p1753-1764.).

The total pore volume seen in the cumulative intrusion data can be separated into two regions with the intrusion data from 214 •m down to about 1 - 4 •m showing the coarse packing of the sample between any agglomerate structures contributing strongly. Below these diameters lies the fine inter-particle packing of the particles themselves. If they also have intra-particle pores, then this region appears bi modal, and by taking the specific pore volume intruded by mercury into pores finer than the modal turning point, i.e. finer than the bi-modal point of inflection, we thus define the specific intra-particle pore volume. The sum of these three regions gives the total overall pore volume of the powder, but depends strongly on the original sample compaction/settling of the powder at the coarse pore end of the distribution.

By taking the first derivative of the cumulative intrusion curve the pore size distributions based on equivalent Laplace diameter, inevitably including poreshielding, are revealed. The differential curves clearly show the coarse agglomerate pore structure region, the inter-particle pore region and the intra-particle pore region, if present. Knowing the intra-particle pore diameter range it is possible to subtract the remainder inter-particle and inter-agglomerate pore volume from the total pore volume to deliver the desired pore volume of the internal pores alone in terms of the pore volume per unit mass (specific pore volume). The same principle of subtraction, of course, applies for isolating any of the other pore size regions of interest.

### Soluble Ions

Soluble anions and cations were determined by suspending the respective compound in water (2 wt.-%, 18.3 M• cm) and extract ing the ions for 16 hrs using a laboratory shaker (180 rpm, IKA HS250 Basic; Staufen im Breisgau, Germany). The suspension was filtered through a filter press (FANN, Huston TX, USA) using a cellulose filter with a particle retention range of 2-5 •m (FANN, Huston TX, USA). An aliquot was taken and filtered through a syringe filter (0.2 •m, Minisart regenerated cellulose, Sartorius, Göttingen, Germany). The filtrate was diluted according to the needs of the method and the respective ion concentration was measured using ion chromatography (882 Compact IC plus, Metrohm, Herisau, Switzerland).

### Phosphorus content

Phosphorous content was determined using sequential wavelength dispersive X-ray fluorescence (ARL Perfom'X sequential X-ray Fluorescence Spectrometer, Thermo Scientific, Waltham MA, USA) with flow proportional counter as the detector. Sample preparation was done by founding the sample and Li-tetraborate into a glass disk (Claisse Fluxer M4, Malvern Panalytical, Malvern, UK).

### Hardness

Granulated product was analysed for hardness using a hardness tester Force Gauge PCE-FN200. The steel flat tip is pressed down onto a single granule until it breakes apart. The peak mode of the measurement corresponds to the highest force applied.

### Examples

### Example 1 - Production of phosphate containing fertilizers

### Aim of study

To develop a process for preparing phosphate containing fertilizers +/- SRCC.

Phosphate rock powder (phosphate rock 1 and phosphate rock 2) of two different origins (One commercially available (PRP2) and one from a stone deposit OMYA mine (PRP1) and surface-reacted calcium carbonate (SRCC1 by Omya) with varying phosphate contents (Table 1), and particle size (respectively available specific surface area) were tested in this study (Table 2). The different particle sizes of phosphate rock samples were obtained by grinding commercially available phosphate rock samples to the desired particle size. The mineralogical composition of the materials is disclosed in Table 3.

**Table 1 Phosphorus content of different phosphorus containing materials**

| **Sample nomenclature** | **P as P₂O₅ [%]** |
|---|---|
| Triple superphosphate (TSP) | 46 |
| Diammonium phosphate (DAP) | 53 |
| Phosphate rock powder 1 (PRP1)* | 13.5 |
| Phosphate rock powder 2 (PRP2)* | 30 |
| Surface reacted calcium carbonate (SRCC1)* | 24 |

| | |
|---|---|
| *mineralogical composition disclosed in Table 2 | |

**Table 2 Martial characteristics for phosphate rock and synthetic hydroxyapatite samples tested in this study**

| | **Particle size d₅₀ [•m]** | **specific surface area [m²/g]** |
|---|---|---|
| surface reacted calcium carbonate (SRCC1) | 6.6 | 53.1 |
| Phosphate rock 1 | 5 | 9 |
| Phosphate rock 2 (coarse) | 272 | <1 |
| Phosphate rock 2 (fine) | 47 | 16 |
| Phosphate rock 2 (ultrafine) | 2 | 29 |

Ultrafine phosphate rock material was obtained by grinding phosphate rock samples starting with commercially available phosphate rock material (Table 3). Surface reacted calcium carbonate was was obtained by preparing 350 litres of an aqueous suspension of ground calcium carbonate in a mixing vessel by adjusting the solids content of a ground limestone calcium carbonate from Omya SAS, Orgon, France having a mass based median particle size of 1.3 •m, as determined by sedimentation, such that a solids content of 10 wt.-%, based on the total weight of the aqueous suspension, is obtained. Whilst mixing the slurry at a speed of 6.2 m/s, 11.2 kg phosphoric acid was added in form of an aqueous solution containing 30 wt.-% phosphoric acid to said suspension over a period of 20 minutes at a temperature of 70°C. After the addition of the acid, the slurry was stirred for additional 5 minutes, before removing it from the vessel and drying using a jet-dryer.

The surface-reacted calcium carbonate (SRCC1) thus obtained had a d₅₀ of 6.6 µm, a *d*₉₈ = 18.4 µm, and specific surface area SSA of 53.1 m²/g with an intra-particle intruded specific pore volume of 0.775 cm³/g for the pore diameter range of 0.004 to 0.41 •m.

SRCC2 was obtained by preparing 488 liters of an aqueous suspension of ground calcium carbonate in a mixing vessel by adjusting the solids content of a ground chalk calcium carbonate from Omya SAS, Omey, France having a particle size distribution of 60 wt.-% less than 2 µm, as determined by sedimentation, such that a solids content of 22 wt.-%, based on the total weight of the aqueous suspension, is obtained. Whilst mixing the slurry at a speed of 5 m/s, 73 kg of 30% concentrated phosphoric acid aqueous solution was added to said suspension over a period of 30 minutes at a temperature of 70°C. After the addition of the acid, the slurry was stirred for additional 5 minutes, before removing it from the vessel and drying using a jet-drier. The SRCC2 thus obtained had a d₅₀ of 5.9 µm, a d98 = 16.7 µm, and specific surface area SSA of 31.5 m²/g with an intra-particle intruded specific pore volume of 0.485 cm³/g for the pore diameter range of 0.004 to 0.38 •m.

Phosphate rock powder 1 (PRP1) was obtained from a stone deposit from one of Omya's deposits in Poland.

Phosphate rock powder 2 (PRP2) was obtained from ICL fertilizer.

**Table 3 Mineralogical composition for phosphate rock and surface reacted calcium carbonate (SRCC1) samples tested in this study only showing crystalline content.**

| Mineral name | Chemical formula | PRP1 | PRP2 | SRCC1 |
|---|---|---|---|---|
| Apatite | Ca₁₀(PO₄)₆(OH, Cl, F) | 47 | 85 | 59 |
| Quartz | SiO₂ | 49 | - | |
| Calcite | CaCO₃ | - | 11 | 41 |
| Others* | | 4 | 4 | |
| Total [%] | | 100 | 100 | 100 |

| | | | | |
|---|---|---|---|---|
| *other minerals with quantities below 1% including dolomite, CaMg(CO₃)₂, gypsum, CaSO₄•2H₂O, talc, Mg₃Si₄O₁₀(OH)₂, feldspar, KAISi₃O₈, clay, KAI₂SiAl₃O₁₀ | | | | |

### Method of preparing rock phosphate fertilizer

The stones were ground down using laboratory equipment to the final particle size as disclosed in Table 2.

Granulation of Phosphate rock 2 with a certain amount of SRCC2 included a mixing stage in the Somakon mixer with a medium size, 5L, volume drum. Prior to mixing, dry SRCC2 powder (99.0-99.8% solids) was loaded with water up until it reached 78-80% solids content. Loading was carried out during 3-4 min at the speed of 300 rpm. Quality of the mixing was assessed by solids content measurements of the mixture of five random powder dosages. When the variation did not exceed 5%, mixing was concluded to be complete.

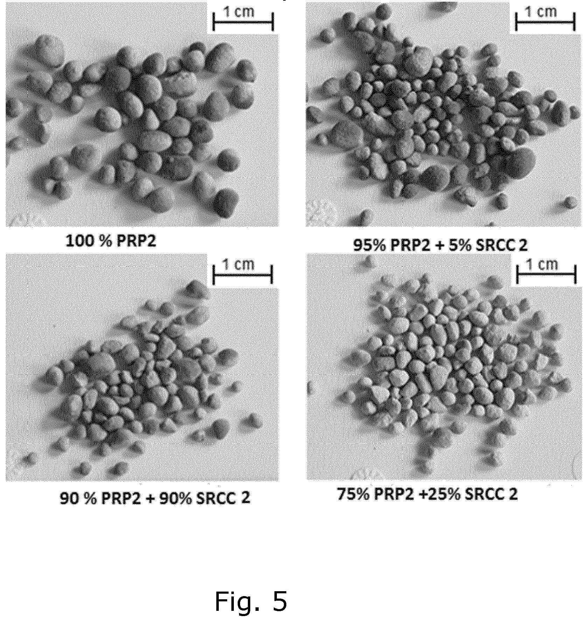

The granulation procedure was performed using Erweka universal unit AR403 with a 40 cm diameter pelletizing pan. Table 5 describes the details of the carried-out experments. Starting material for each experiment was 500 g of dry powder: PRP2 or PRP2 with SRCC2 mixed in Somakon (see above). The weight of SRCC2 was taken in a dry state. The powder was then placed in the pelletizer at 140 rpm rotation speed. Lignin sulfonate (Domsjö) was gradually added to the powder mixture in the form of 20% aqueous solution. The amount of added binder was concluded to be sufficient when the granules were formed in the pan. The final amount of dry Lignin Sulfonate required for granulation was in the range 2.3-3.0%, which is similar to standard ground calcium carbonate granulation. After the granulation, the products were placed in the oven at 110°C overnight. The final products are disclosed in figure 5.

Dry product was analysed for hardness using a hardness tester Force Gauge PCE-FN200 and for size using Retsch Camsizer.

### Example 2 - Determination of release rate of soluble phosphate at pH 3 and pH 6

### Aim of study

To determine the release rate of soluble phosphate buffer at pH 3 and pH 6 for finely ground phosphate rock. It is of importance to test the efficacy of the fertilizer at different pHs since potential applications might range from acid soils to soils with higher pH. Reactivity for P fertilizers that are water insoluble and partially soluble in acid depends on the amount of acid in the system i.e. soil pH. While for coarse particles it is likely that they will partially be soluble under strong acidic conditions, the solubility at alkaline pH is expected to be very low. The solubility test for water insoluble phosphate rock and SRCC1 at high pH is the ultimate test to compare their performance against the benchmark fertilizers.

### Materials and methods

Buffered solution of 2% citrate were prepared from citric acid (99%, Sigma-Aldrich, St. Louis USA), trisodium citrate dihydrate (•99%, Sigma -Aldrich, St. Louis USA) and demineralized water according to standard preparation tables. The pH was adjusted by adding concentrated sodium hydroxide solution (NaOH, •98%, Sigma -Aldrich, St. Louis USA). All solutions very freshly prepared on the day of measurements.

Phosphate release rates were determined in triplicate. A sample of 100 mg material was placed in a 250 ml Erlenmeyer flask and 150 ml of the respective prewarmed buffer was added. The flasks were placed in a shaking water bath (SW23, Julabo, Seelbach, Germany) maintained at 25°C and agitated at 120 rpm. After 1 hr a 2 ml sample was drawn using a needle and syringe. The sample was filtered through a 0.2 µm syringe filter (regenerated cellulose, Chromafil Xtra RC-20/25, Macherey-Nagel, Düren, Germany) and placed in a 5 ml polypropylene tube. The sample was then diluted with deionized water according to needs in a 10 ml polypropylene tube. The phosphate concentration was determined using a cuvette test kit (LCK349, phosphate (ortho/total), Hach Lange GmbH, Düsseldorf, Germany) and the corresponding UV/vis spectrophotometer (DR 6000, Hach Lange GmbH, Düsseldorf, Germany). Samples were analysed on the same day and immediately after dilution.

### Results

Reactivity of finely ground phosphate rock can be increased dramatically by decreasing particle size, which in turn increases surface area, even at pH 6 (Table 4 and Fig 1).

By increasing surface area of particles, inorganic particle with behaviour similar to water soluble fertilizers can be obtained and reactivity increased even further (Table 4 and Fig 2). Full solubility can be achieved with surface-reacted calcium carbonate at neutral pH after 1 hour of exposure.

**Table 4 Release rate of soluble phosphorus form ultrafine phosphate rock, surface-reacted calcium carbonate, triple superphosphate and diammonium phosphate at after 1hr exposure time at 2% citrate buffer solution at pH 3 and pH 6.**

| | | pH 3 | pH 6 |
|---|---|---|---|
| Triple superphosphate (TSP) | | | |
| | mean [%] | 98 | 93 |
| | CV (%) | 0.8 | 0.7 |

| Diammonium phosphate | | | |
|---|---|---|---|
| | mean [%] | 97 | 89 |
| | CV (%) | 2.9 | 11.9 |

| surface reacted calcium carbonate (SRCC1) | | | |
|---|---|---|---|
| | mean [%] | 98 | 96 |
| | CV (%) | 1.2 | 1.7 |

| Phosphate rock 1 | | | |
|---|---|---|---|
| | mean [%] | 95 | 27 |
| | CV (%) | 2.2 | 0.6 |

| Phosphate rock 2 | | | |
|---|---|---|---|
| coarse* | mean [%] | 10 | 3 |
| | CV (%) | 8.1 | 4.4 |
| fine* | mean [%] | 46 | 10 |
| | CV (%) | 17.3 | 6.3 |
| ultrafine* | mean [%] | 58 | 37 |
| | CV (%) | 4.2 | 5.2 |

| | | | |
|---|---|---|---|
| CV, coefficient of variation, *, coarse, fine and ultrafine as defined in Table 3 | | | |

### Conclusion

The results demonstrate that decreasing the particle size increases the P solubility of phosphate rock significantly even at alkaline pH. Furthermore, by increasing the reactive surface area, as demonstrated by the SRCC1, the P solubility can be increased dramatically. As can be seen, the solubility of SRCC1 for pH 3 and pH 6 matches the solubility obtained for water soluble fertilizers i.e. TSP and DAP.

### Example 3 - Determination of time-dependent release pattern rate of soluble phosphorus in soil solution

### Aim of study

To determine the release pattern of soluble phosphorus in soil solution. The release pattern of P in soil solution is an important test, since it demonstrates how much of P is available in soil solution and likely available for uptake by the plants.

### Materials and methods

Soils were collected in Northern Florida U.S.A. in a loblolly pine (*Pinus taeda*) plantation. The soils are classified as a sandy soil (with a low organic matter at % and a background pH of the soil is 4.72. The collected soils were air-dried and sieved through a 2 mm sieve with any root and rock material removed.

Field capacity of the soil was determined by applying a hydraulic head (suction pressure) of -0.33 bar to saturated soil over a 24 hours period. After 24 hours the soil was oven dried at 105 °C for 48 hours to determine water content. Field capacity was determined using 4 replicated samples and was found to be at 7% gravimetric water content.

Field equivalency was based on the surface area of the container. The Calciprill was ground to a fine powder using CT 293 Cyclotec^{™} Foss (Foss Hilleroed,DNK). The incubation was replicated 4 times (20 containers). The soils were sealed during the incubation, with daily openings to allow for oxygen exchange with the atmosphere. After 5 days the soils were measured for pH, using a Oakton^{™} pH 700 meter, using a 1:1 water slurry (Hendershot et al., 2008).

The main incubation study consisted of 4 treatments replicated 4 times, with individual microcosms for each sampling time. The P treatments were either received ground to a fine powder or were ground once received using the CT 293 Cyclotec^{™} Foss (Foss Hilleroed,DNK). The treatments included two commonly used P fertilizers, Triple Superphosphate (TSP) and Diammonium Phosphate (DAP), phosphate rock 1 and synthetic hydroxyapatite, lastly a control was included that received no P.

The recommended rate of application of total P to forest soils is between 28 and 56 kg P₂O₅ ha⁻¹. In this study the field equivalent rate added to the jars was 200 kg P₂O₅ ha⁻¹, the higher than commercially recommended rate was used to simply increase the quantity being added per jar. The larger the rate the less likelihood for human error in weighing or mixing. The calculation was based on the surface area of the soil and the % P₂O₅ within each product to ensure that every container receives the same amount of P₂O₅ (Table 1). To begin, soils were added to the jars and brought up to 7% gravimetric water content 7 days prior to the incorporation of the P treatments. The delay between the re-wetting and P addition was to allow for any potential "priming effect", which may release organic matter P (Kuzyakov 2010), to occur and stabilize prior to the application. The P fertilizer was added by emptying the soil into a shallow stainless steel tray and sprinkling the entirety of the treatment P material on the soil surface, then mixing the P thoroughly. If any material remained in the container 3 ml of water was used to collect it and then added to the soil. Three of the replicates contained 100 grams dry soil, while the fourth container contained 650 grams dry soil. Application rates were scaled down to the 100 grams using the field equivalent calculations for the 650 gram container. In all 4 containers, soils were destructively sampled on days 1, 3, 7, 14, 21, 56, 90 and 125. The containers were opened on a weekly basis to ensure adequate oxygen exchanged. Samples were analyzed for P following the Mehlich 3 method (Mehlich 1984), Mehlich 3 is used to quantify plant available phosphorus. For each container, 5 grams were weighed into a centrifuge tube where 50 ml of Mehlich 3 extractant solution is added and shaken for 5 minutes. The extractant is then filtered through at Whatman^{®} #41 filter paper (Whatman^{®}, Buckinghamshire, UK) before either being analyzed immediately or frozen at -10°C. The extractant is analyzed on a Lachat Quickchem 8500 Series 2 FIA System using method 12-115-01-1-A (Hach, Loveland, USA).

### Results

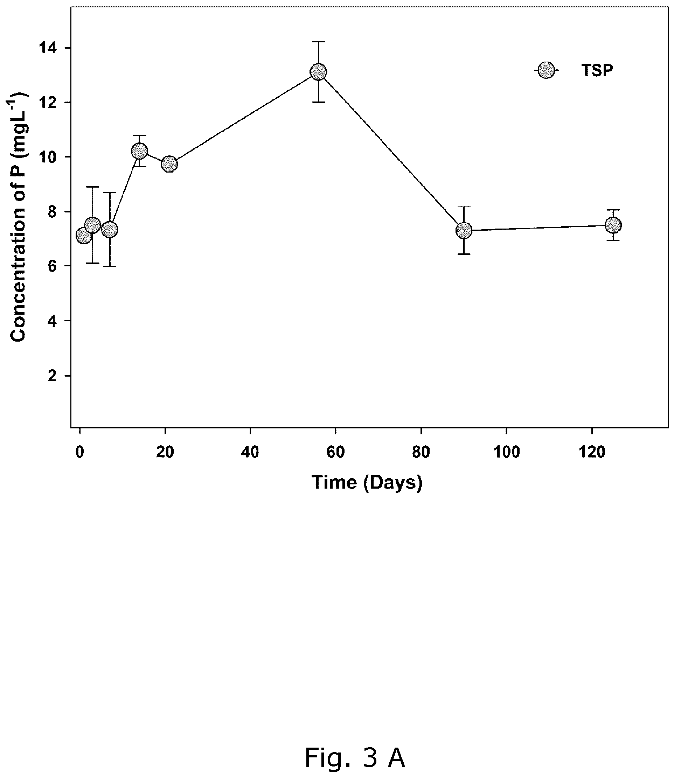

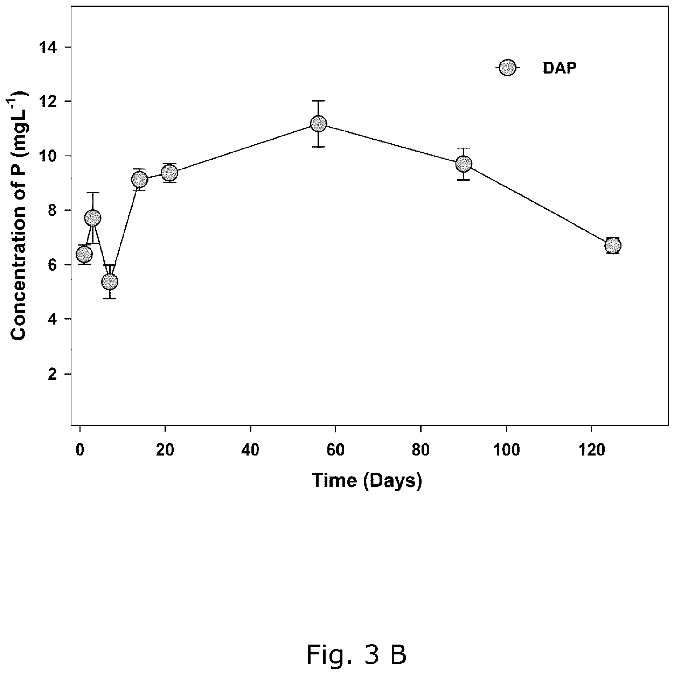

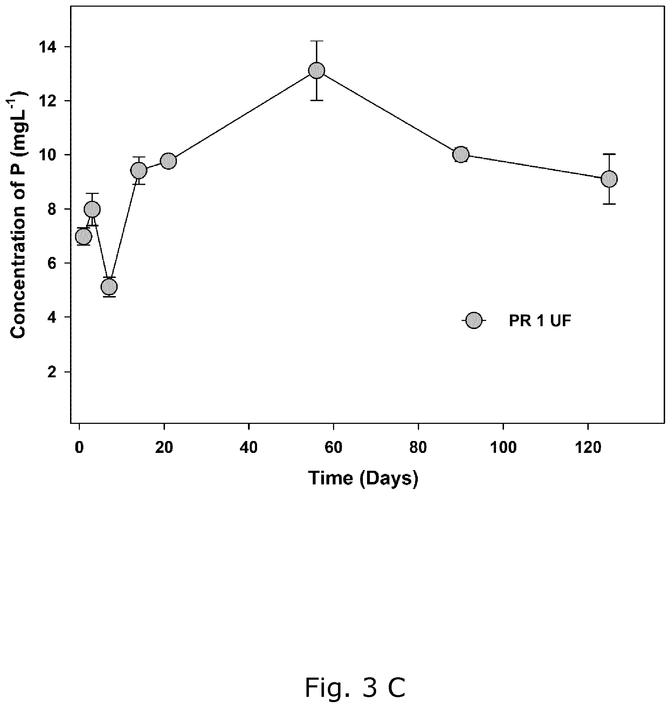

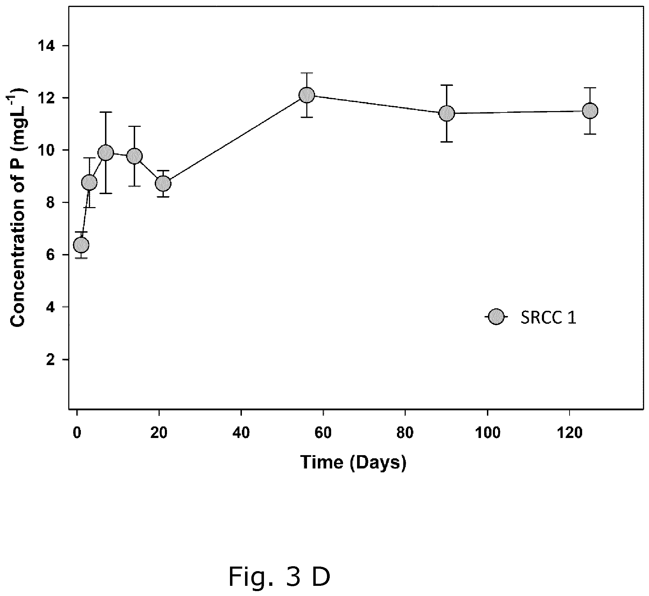

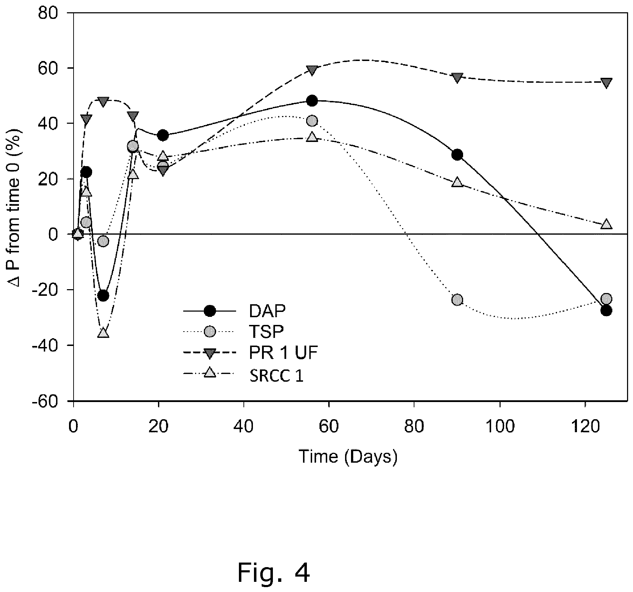

- P release peaked on day 56 before declining.
- Day 125 values below Day 1 concentration with DAP, TSP (Fig. 3 and 4)
- surface reacted calcium carbonate reaches higher values at peak and at day 125 compared to TSP and DAP (Fig. 3 and 4).
- Phosphate rock had sustained elevated P concentrations due to what is believed to be caused by slow release (Fig. 3 and 4).

### Conclusion

- Comparable or better release rates could be shown for surface-reacted calcium carbonate with fast release in first days.
- Inorganic materials that behaves like water soluble fertilizers.
- Different release pattern and sustained release from phosphate rock buffers opportunity to create specific product with combination of fast/slow release depending on composition (ratio surface-reacted calcium carbonate to phosphate rock).

### Example 4 - granulation of fertilizer composition

### Aim of study

To provide experimental evidence for granulation of micronized phosphate rock and mix of phosphate rock and surface-reacted calcium carbonate.

### Materials and methods

The raw materials used for the granulation experiments were the following:
- Phosphate rock 2 (PRP2) (as described in example 1).
- surface-reacted calcium carbonate (SRCC 2) (a modified version of previous SRCC1 as described in example 1 with d₅₀~5.80 •m, specific surface area SSA 28.4 m²/g).
- Binder: Sodium lignin sulfonate (solid) obtained from Domsjö.

Granulation of phosphate rock 2 with a specific amount of SRCC2 included a mixing stage in the Somakon mixer with a medium size, 5L, volume drum. Prior to mixing, dry SRCC2 powder (99.0-99.8 wt.-% solids) was loaded with water until it reached 78-80 wt.-% solids content. Loading was carried out over 3-4 min at a speed of 300 rpm. Quality of the mixing was assessed by solids content measurements of the mixture of five random powder dosages. When the variation did not exceed 5 wt.-%, mixing was concluded to be complete.

The granulation procedure was performed using an Erweka universal unit AR403 with a 40 cm diameter pelletizing pan. Table 5 describes the details of the experiments. Starting material for each experiment was 500 g of dry powder: PRP2 or PRP2 with SRCC2 mixed in Somakon (see above). The powder was then placed in the pelletizer at 140 rpm rotation speed. Lignin sulfonate (Domsjö) was gradually added to the powder mixture in the form of 20% aqueous solution. The amount of added binder was concluded to be sufficient when the granules were formed in the pan. The final amount of dry Lignin Sulfonate required for granulation was in the range 2.3-3.0 wt.-%, which is similar to standard ground calcium carbonate granulation. After the granulation, the products were placed in the oven at 110°C overnight. The final products are disclosed in figure 5.

Dry product was analyzed for hardness using a hardness tester Force Gauge PCE-FN200 and for size using Retsch Camsizer.

**Table 5. Granule fertilizer composition and product characteristics.**

| **Sample** | **Comp1** | **Comp2** | **Comp3** | **Comp4** | **Comp5** |
|---|---|---|---|---|---|
| Angle of the plate, ° | 53 | 53 | 53 | 53 | 53 |

| **Ingredient 1** | **PRP1** | **PRP2** | **PRP2** | **PRP2** | **PRP2** |
|---|---|---|---|---|---|
| proportion, % | 100% | 95% | 95% | 90% | 75% |
| Weight, g | 500 | 475 | 475 | 450 | 375 |

| **Ingredient 2** | | **SRCC 2** | **SRCC 2** | **SRCC 2** | **SRCC 2** |
|---|---|---|---|---|---|
| proportion, % | | 5% | 5% | 10% | 25% |
| Weight, g | | 25 | 25 | 50 | 125 |
| Total weight, g | 500 | 500 | 500 | 500 | 500 |
| Amount of binder, g | 74.3 | 73.1 | 73.1 | 59.4 | 67.1 |
| dry binder weight, g | 14.9 | 14.6 | 14.6 | 11.9 | 13.4 |

| **binder % in the product** | **2.9%** | **2.8%** | **2.8%** | **2.3%** | **2.6%** |
|---|---|---|---|---|---|
| Water added, g | 23.5 | 20.6 | 28.3 | 19.8 | 20.1 |
| Total water: | 82.9 | 85.3 | 93.0 | 79.8 | 105.0 |
| Liq binder + additional water + water from loaded SRCC | | | | | |
| Pelletization time, min | 27 | 12 | 22 | 15 | 15 |
| Wet pellets, g | 578.1 | 250.6 | 301.6 | 476.6 | 489.2 |
| Dry pellets, g | 494.6 | 212.5 | 251.3 | 405.0 | 459.3 |
| Pellets >5 mm, % | | 25.3% | 5.7% | 3.5% | 0.5% |
| Pellets <2 mm, % | | 18.1% | 35.7% | 39.1% | 62.7% |
| Hardness, N (Newton) | 4.7 | 2.6 | 3.1 | 2.6 | 1.7 |
| d₁₀, mm | 2.40 | 2.49 | 2.22 | 2.28 | 2.15 |
| d₅₀, mm | 3.69 | 3.72 | 2.98 | 3.17 | 2.70 |
| d₉₀, mm | 4.85 | 4.85 | 4.35 | 4.46 | 3.70 |

### Results

Product hardness and size are documented in the Table 5. For the PRP2 granulation the measured hardness in general is higher than that obtained for compositions with addition of SRCC 2.

Hardness of the granules (Newton) decreases with addition of SRCC 2 to the mixture: from 4.7 N to 2.7-N 2.6 N to 1.7 N for the 100% PRP2 and with added 5 wt.-%, 10 wt.-% and 25 wt.-% of SRCC 2, respectively.

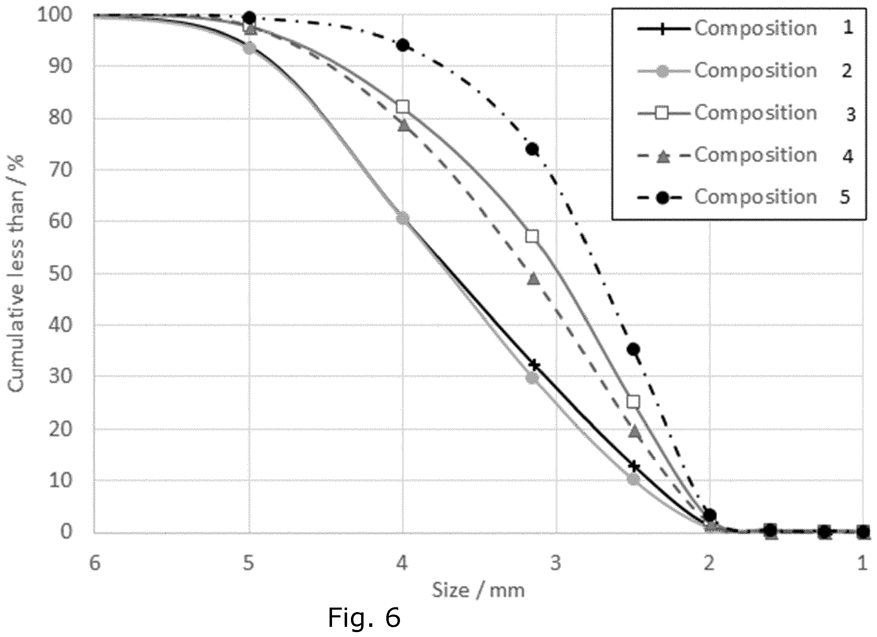

The larger the proportion of SRCC 2 was, the more fines (<2mm) were in the final product. Figure 6 depicts the cumulative size distribution of the granules within 2-5 mm range as measured by Camsizer. There is some variation in the product size with the same formulation, which is attributed to the other process parameters.

### Example 5 - Experimental slurry stabilization

A slurry based on phosphate rock d₅₀ of 6.3 •m and originating from the same material as phosphate rock samples 1 (PRP1) was prepared using a polycarboxylate based dispersing agent. The goal was to obtain a stable slurry for a short time (several hours to1 day).

Slurries with a concentration of 60.6 wt.-% (formulation 1), 70.8 wt.-% (formulation 2), 70.2 wt.% (formulation 3) and 73.4 wt.-% (formulation 4) solids content, respectively were produced by adding the phosphate rock material to water in the amount to obtain the final solid content. Dispersing agent was added by mixing the slurry continuously. The aim was a slurry with a viscosity of 200-300 mPas.

### Conclusion

The results demonstrate that by using a suitable dispersing agent it is possible to obtain a stable slurry based on phosphate rock. Such slurries can be applied directly to the field or in nursery operation using standard equipment used in agriculture including irrigation equipment. The slurry offers the advantages of a highly reactive phosphate containing fertilizer and can be used during irrigation operations. Furthermore, if necessary the slurry can be diluted to obtain lower solid content.

### Example 6 - Growth response study

### Materials and methods

### Sources of Phosphorus Products:

SRCC1, TSP, and PR2 (ultrafine) as defined in Table 1 and Table 2 in example 1, were used in greenhouse study to examine the effect from fertilization on growth response of Eucalyptus seedlings.

### Greenhouse Study:

The soil used was forest soil collected in northern part of Italy. Pertinent soil properties were: pH (H₂O) = 4.9, Olsen P = 5 mg kg⁻¹, organic matter =12.2%, CEC = 5.3 cmol kg⁻¹, sand =73.9%, clay =5.2%, silt= 20.9%. The P sources used were HA, PR2, TSP and mixed (HA + PR2) at 50:50 weight ratio. A pot with a diameter of 28 cm containing 30 kg of soil was treated with each P source by incorporation at a P rate of 8.7 mg P kg⁻¹ soil. To balance other nutrients, K was added at a rate of and 110 mg K kg-¹ for all the treatments so that P was the only limiting factor on plant growth.

A young *Eucalyptus globulus Labill.* seedling at the second true leaf unfolded growth stage was planted in each pot. Three replications were set up with each treatment and the pots were arranged in a randomized block design. The plants were grown for 154 days before harvest. The dry-matter yield (DMY) of above-ground plant biomass and plant roots were measured after harvesting and drying to constant weight.

### Results

There was no significant plant response (p • 0.10) to P fertilization except for SRCC1, which was significantly higher than the check (nil P) in terms of combined dry-matter yield (DMY) of above-ground plant biomass and roots (table below). The results clearly demonstrate that the addition of SRCC1 to acidic soils has a significant effect on the growth response of *Eucalyptus.* Further, although not significant, the results demonstrate a positive trend for the application of PR2 in combination with SRCC1. The effect can be explained by the by the higher P solubility of the SRCC1. It is pointed out, that the application of SRCC1 as observed in the greenhouse experiment outperforms the effect from TSP, which failed to increase the growth of *Eucalyptus* seedlings compared to control.

**Table 6. CaCO₃ Dry-matter yield (DMY) of Eucalyptus seedlings grown after 154 Days.**

| **P Source** | **Combined Dry-Matter Yield (Biomass + Root), gpot⁻¹*** |
|---|---|
| Control | 552A |
| TSP | 562A |
| PR2 (ultrafine) | 561A |
| SRCC1 | 666B |
| SRCC1+PR2 ultrafine (50:50) | 612AB |

### Conclusion

The SRCC1 is more suitable for application on acid soils compared to commonly used water-soluble fertilizers such as TSP.

## Claims

1. A fertilizer composition comprising
- phosphate rock powder (PRP);
- surface-reacted calcium carbonate (SRCC); and
- optionally a binder;
- wherein the surface-reacted calcium carbonate is a reaction product of natural and/or synthetic calcium carbonate, a H₃O⁺ donor and a phosphate source.

2. A fertilizer composition according to claim 1,
- wherein the H₃O⁺ donor is selected from phosphoric acid; or;
- wherein the H₃O⁺ donor is a weak acid and the phosphate source is a phosphate salt

3. A fertilizer composition according to claim 2, wherein the weak acid is selected from acetic acid, formic acid, propanoic acid and/or mixtures thereof and the phosphate salt is selected from sodium, potassium, lithium and/or mixtures thereof with H₂PO_{4⁻}, HPO₄²⁻, PO₄³⁻ and/or mixtures thereof, preferably the phosphate salt is a salt of sodium, or potassium or both with H₂PO_{4⁻}.

4. A fertilizer composition according to any of claims 1 to 3, wherein the PRP has a weight median particle size d₅₀ in the range of 2 µm - 50 µm and wherein the SRCC has a volume median particle size d₅₀ in the range of 1 µm - 100 µm.

5. The fertilizer composition according to any of claims 1 to 4, wherein the source of natural calcium carbonate for preparing the surface-reacted calcium carbonate is selected from the group of marble, calcite, chalk, limestone or dolomite and/or mixtures thereof, and/or wherein the synthetic calcium carbonate for preparing the surface-reacted calcium carbonate is precipitated calcium carbonate selected from the group of aragonitic, vateritic or calcitic mineralogical crystals form, especially prismatic, rhombohedral, scalenohedral and mixtures thereof.

6. The fertilizer composition according to any of claims 1 to 5, comprising
- 1-99 wt.-% PRP;
- 99-1 wt.-% SRCC; and
- optionally, 1-10 wt.-% binder.

7. The fertilizer composition according to any of claims 1 to 6, wherein the composition is in the form of a powder, granules, prills or pellets.

8. The fertilizer composition according to any of claims 1 to 7, wherein the composition further comprises a dispersing agent.

9. The fertilizer composition according to any claims 1 to 8, wherein the composition is in the form of a slurry.

10. The fertilizer composition according to any of claims 1 to 9, further comprising one or more of pesticides, herbicides, pigments, potassium ions, boron ions, zink ions, quartz, silica, calcite, dolomite, feldspar, kaolinite, mica and/or mixtures thereof.

11. A fertilizer pre-mix comprising
- Phosphate rock powder (PRP);
- Surface-reacted calcium carbonate (SRCC);
- a dispersing agent and
- optionally a binder;
- wherein the surface-reacted calcium carbonate is a reaction product of natural and/or synthetic calcium carbonate, a H₃O⁺ donor and a phosphate source.

12. A method for preparing a fertilizer composition according to any of claims 1-10, the method comprising
- providing phosphate rock powder (PRP);
- providing surface-reacted calcium carbonate (SRCC);
- optionally providing a binder;
- optionally providing a dispersing agent,
- mixing the PRP, the SRCC and optionally the binder and/or dispersing agent; and
- obtaining the composition according to any of claims 1-10.

13. The method according to claim 12, wherein the method further comprises mixing the powder with a dispersing agent and obtaining a fertilizer pre-mix according to claim 11.

14. The fertilizer composition according to any of claims 1-10, wherein the surface-reacted calcium carbonate (SRCC) is loaded with phosphate.

15. A method of fertilizing soil or a planting substrate, said method comprises applying the fertilizer composition according to claims 1-10 to a plant hole, to the planting line, to the ripping line, on the planting bed, on or into the soil and/or on or into a planting substrate.

16. Use of a fertilizer composition according to any of claims 1-10 or 14 as a fertilizer, such as a P fertilizer.

## Patentansprüche

1. Düngemittelzusammensetzung, umfassend
- Phosphatgesteinspulver (PRP);
- oberflächenreagiertes Kalziumkarbonat (SRCC); und
- optional ein Bindemittel;
- wobei das oberflächenreagierte Kalziumkarbonat ein Reaktionsprodukt aus natürlichem und/oder synthetischem Kalziumkarbonat, einem H₃O⁺-Donor und einer Phosphatquelle ist.

2. Düngemittelzusammensetzung nach Anspruch 1,
- wobei der H₃O⁺-Donor ausgewählt ist aus Phosphorsäure; oder;
- wobei der H₃O⁺-Donor eine schwache Säure ist und die Phosphatquelle ein Phosphatsalz ist.

3. Düngemittelzusammensetzung nach Anspruch 2, wobei die schwache Säure aus Essigsäure, Ameisensäure und Propansäure und/oder Gemischen davon ausgewählt ist, und das Phosphatsalz aus Natrium, Kalium, Lithium und/oder Gemischen davon mit H₂PO₄⁻, HPO₄²⁻, PO₄³⁻ und/oder Gemischen davon ausgewählt ist, wobei das Phosphatsalz vorzugsweise ein Salz von Natrium oder Kalium oder beiden mit H₂PO₄⁻ ist.

4. Düngemittelzusammensetzung nach einem der Ansprüche 1 bis 3, wobei das PRP eine gewichtsmittlere Partikelgröße *d*₅₀ im Bereich von 2 µm - 50 µm aufweist und wobei das SRCC eine volumenmittlere Partikelgröße d₅₀ im Bereich von 1 µm - 100 µm aufweist.

5. Düngemittelzusammensetzung nach einem der Ansprüche 1 bis 4, wobei die Quelle für natürliches Kalziumkarbonat zur Herstellung des oberflächen reagierten Kalziumkarbonats ausgewählt ist aus der Gruppe von Marmor, Kalzit, Kreide, Kalkstein oder Dolomit und/oder Gemischen davon, und/oder wobei das synthetische Kalziumkarbonat zur Herstellung des oberflächenreagierten Kalziumkarbonats ein ausgefälltes Kalziumkarbonat ist, das aus der Gruppe der aragonitischen, vateritischen oder kalzitischen mineralogischen Kristallformen, insbesondere prismatischen, rhomboedrischen, skalenoedrischen und Gemischen davon, ausgewählt ist.

6. Düngemittelzusammensetzung nach einem der Ansprüche 1 bis 5, umfassend
- 1-99 Gew.-% PRP;
- 99-1 Gew.-% SRCC; und
- optional, 1-10 Gew.-% Bindemittel.

7. Düngemittelzusammensetzung nach einem der Ansprüche 1 bis 6, wobei die Zusammensetzung in Form eines Pulvers, von Granulaten, Granalien oder Pellets ist.

8. Düngemittelzusammensetzung nach einem der Ansprüche 1 bis 7, wobei die Zusammensetzung weiter ein Dispergiermittel umfasst.

9. Düngemittelzusammensetzung nach einem der Ansprüche 1 bis 8, wobei die Zusammensetzung in Form einer Aufschlämmung ist.

10. Düngemittelzusammensetzung nach einem der Ansprüche 1 bis 9, weiter umfassend eines oder mehrere von Pestiziden, Herbiziden, Pigmenten, Kaliumionen, Borionen, Zinkionen, Quarz, Siliciumdioxid, Kalzit, Dolomit, Feldspat, Kaolinit, Glimmer und/oder Gemischen davon.

11. Düngemittel-Vorgemisch, umfassend
- Phosphatgesteinspulver (PRP);
- oberflächenreagiertes Kalziumkarbonat (SRCC);
- ein Dispergiermittel und
- optional ein Bindemittel;
- wobei das oberflächenreagierte Kalziumkarbonat ein Reaktionsprodukt aus natürlichem und/oder synthetischem Kalziumkarbonat, einem H₃O⁺-Donor und einer Phosphatquelle ist.

12. Verfahren zur Herstellung einer Düngemittelzusammensetzung nach einem der Ansprüche 1-10, wobei das Verfahren umfasst
- Bereitstellen von Phosphatgesteinspulver (PRP);
- Bereitstellen von oberflächenreagiertem Kalziumkarbonat (SRCC);
- optional Bereitstellen eines Bindemittels;
- optional Bereitstellen eines Dispergiermittels,
- Mischen des PRP, des SRCC und optional des Bindemittels und/oder Dispergiermittels; und
- Erhalten der Zusammensetzung nach einem der Ansprüche 1-10.

13. Verfahren nach Anspruch 12, wobei das Verfahren weiter das Mischen des Pulvers mit einem Dispergiermittel und Erhalten eines Düngemittel-Vorgemisches nach Anspruch 11 umfasst.

14. Düngemittelzusammensetzung nach einem der Ansprüche 1-10, wobei das oberflächenreagierte Kalziumkarbonat (SRCC) mit Phosphat beladen ist.

15. Verfahren zum Düngen von Erde oder einem Pflanzsubstrat, wobei das Verfahren das Aufbringen der Düngemittelzusammensetzung nach den Ansprüchen 1-10 auf ein Pflanzloch, auf die Pflanzlinie, auf die Reißlinie, auf das Pflanzbeet, auf oder in den Boden und/oder auf oder in ein Pflanzsubstrat umfasst.

16. Verwendung einer Düngemittelzusammensetzung nach einem der Ansprüche 1-10 oder 14 als Düngemittel, wie als P-Düngemittel.

## Revendications

1. Composition d'engrais comprenant
- de la poudre de roche phosphatée (PRP) ;
- du carbonate de calcium ayant réagi en surface (SRCC) ; et
- facultativement un liant ;
- dans laquelle le carbonate de calcium ayant réagi en surface est un produit de réaction de carbonate de calcium naturel et/ou synthétique, d'un donneur de H₃O⁺ et d'une source de phosphate.

2. Composition d'engrais selon la revendication 1,
- dans laquelle le donneur de H₃O⁺ est choisi parmi l'acide phosphorique ; ou,
- dans laquelle le donneur de H₃O⁺ est un acide faible et la source de phosphate est un sel de phosphate.

3. Composition d'engrais selon la revendication 2, dans laquelle l'acide faible est choisi parmi l'acide acétique, l'acide formique, l'acide propanoïque et/ou des mélanges de ceux-ci et le sel de phosphate est choisi parmi le sodium, le potassium, le lithium et/ou des mélanges de ceux-ci avec du H₂PO₄⁻, du HPO₄²⁻, du PO₄³⁻ et/ou des mélanges de ceux-ci, de préférence le sel de phosphate est un sel de sodium, ou de potassium, ou les deux, avec du H₂PO₄⁻.

4. Composition d'engrais selon l'une quelconque des revendications 1 à 3, dans laquelle la PRP présente une taille de particule médiane en poids d₅₀ dans la plage de 2 µm-50 µm et dans laquelle le SRCC présente une taille de particule médiane en volume *d*₅₀ dans la plage de 1 µm-100 µm.

5. Composition d'engrais selon l'une quelconque des revendications 1 à 4, dans laquelle la source de carbonate de calcium naturel pour préparer le carbonate de calcium ayant réagi en surface est choisie dans le groupe composé du marbre, de la calcite, de la craie, du calcaire ou de la dolomite et/ou des mélanges de ceux-ci, et/ou dans laquelle le carbonate de calcium synthétique pour préparer le carbonate de calcium ayant réagi en surface est du carbonate de calcium précipité choisi dans le groupe composé de cristaux minéralogiques aragonitiques, vatéritiques ou calcitiques, en particulier prismatiques, rhomboédriques, scalénoédriques et des mélanges de ceux-ci.

6. Composition d'engrais selon l'une quelconque des revendications 1 à 5, comprenant
- 1-99 % en poids de PRP ;
- 99-1 % en poids de SRCC ; et
- facultativement, 1-10 % en poids de liant.

7. Composition d'engrais selon l'une quelconque des revendications 1 à 6, dans laquelle la composition se présente sous la forme d'une poudre, de granulés, de granules ou de pellets.

8. Composition d'engrais selon l'une quelconque des revendications 1 à 7, dans laquelle la composition comprend en outre un agent de dispersion.

9. Composition d'engrais selon l'une quelconque des revendications 1 à 8, dans laquelle la composition se présente sous la forme d'une suspension.

10. Composition d'engrais selon l'une quelconque des revendications 1 à 9, comprenant en outre un ou plusieurs parmi pesticides, herbicides, pigments, ions potassium, ions bore, ions zinc, quartz, silice, calcite, dolomite, feldspath, kaolinite, mica et/ou des mélanges de ceux-ci.

11. Pré-mélange d'engrais comprenant
- de la poudre de roche phosphatée (PRP) ;
- du carbonate de calcium ayant réagi en surface (SRCC) ;
- un agent de dispersion et
- facultativement un liant ;
- dans lequel le carbonate de calcium ayant réagi en surface est un produit de réaction de carbonate de calcium naturel et/ou synthétique, d'un donneur de H₃O⁺ et d'une source de phosphate.

12. Procédé de préparation d'une composition d'engrais selon l'une quelconque des revendications 1-10, le procédé comprenant
- la fourniture de poudre de roche phosphatée (PRP) ;
- la fourniture de carbonate de calcium ayant réagi en surface (SRCC) ;
- facultativement, la fourniture d'un liant ;
- facultativement, la fourniture d'un agent de dispersion,
- le mélange de la PRP, du SRCC et facultativement du liant et/ou de l'agent de dispersion ; et
- l'obtention de la composition selon l'une quelconque des revendications 1-10.

13. Procédé selon la revendication 12, dans lequel le procédé comprend en outre le mélange de la poudre avec un agent de dispersion et l'obtention d'un pré-mélange d'engrais selon la revendication 11.

14. Composition d'engrais selon l'une quelconque des revendications 1-10, dans laquelle le carbonate de calcium ayant réagi en surface (SRCC) est chargé de phosphate.

15. Procédé de fertilisation de sol ou d'un substrat de plantation, ledit procédé comprenant l'application de la composition d'engrais selon les revendications 1-10 à un trou de plantation, à la ligne de semis, à la ligne de scarifiage, sur la plate-bande, sur ou dans le sol et/ou sur ou dans un substrat de plantation.

16. Utilisation d'une composition d'engrais selon l'une quelconque des revendications 1-10 ou 14 comme engrais, tel qu'un engrais phosphoré.
